# EUROPEAN PATENT SPECIFICATION

(11) **EP 2 368 946 B1**
(45) Date of publication and mention of the grant of the patent: **11.09.2013**
(21) Application number: 11158239.1
(22) Date of filing: 15.03.2011
(51) Int. Cl.: C09D 11/00

(54) **Ink composition, ink set and image forming method**
Tintenzusammensetzung, Tintensatz und Bilderzeugungsverfahren
Composition d'encre, jeu d'encre et procédé de formation d'images

(30) Priority: 26.03.2010 JP 2010073007
(43) Date of publication of application: 28.09.2011
(73) Proprietor: Fujifilm Corporation, Minato-ku Tokyo (JP)
(72) Inventor: Ikoshi, Masao, Kanagawa (JP)
(74) Representative: HOFFMANN EITLE

(56) References cited:
- EP-A1- 0 823 464
- WO-A1-2007/102356

## Description

### BACKGROUND OF THE INVENTION

### Field of the Invention

The present invention relates to an ink composition, an ink set, and an image forming method using the same.

### Description of the Related Art

In recent years, as a result of ever-increasing demand for the protection of resources, the protection of the environment, the enhancement of operational stability, and the like, the conversion of inks into aqueous products is advancing. As in the case of oil-based inks, the qualities demanded in aqueous inks include fluidity, storage stability, glossiness of film, clarity, coloring ability, and the like. However, compared to oil-based vehicles, most pigments have a markedly poor adaptability to aqueous vehicles with respect to pigment dispersibility and the like, and therefore, satisfactory quality cannot be obtained by conventional dispersion methods. The use of various additives such as, for example, aqueous pigment dispersion resins or surfactants, has hitherto been studied, but an aqueous ink that satisfies all the adaptation properties described above and is comparable to existing high quality oil-based inks has not been obtained.

In order to solve these problems, for example, an aqueous ink composition that contains metal oxide particles including pigment, colloidal silica, and the like has been disclosed (see, for example, Japanese Patent Application Laid-Open (JP-A) No. 2007-91920). Further, an aqueous ink composition containing a pigment dispersed by using a surfactant, a phosphonium compound, and a silicate ion has been disclosed (see, for example, JP-A No. 2003-165936).

### SUMMARY OF THE INVENTION

According to an aspect of the invention, an inkjet ink composition, which is excellent in dispersion stability, discharge reliability and suppression of lowering of liquid repellency of the inkjet head member, and which includes a pigment, a polymer compound, a water soluble organic solvent, a silicon compound and water, the polymer compound including a structural unit represented by the following Formula (1), a structural unit represented by the following Formula (2), and a structural unit represented by the following Formula (3); the water soluble organic solvent being a diol compound including a repetition structure formed from oxyalkylene groups having 2 or 3 carbon atoms; and the silicon compound being selected from the group consisting of colloidal silica and water-soluble alkali metal salts of silicic acid: as well as an ink set including the inkjet ink composition and a treatment liquid containing a cationic polymer compound, and an inkjet image forming method, are provided. 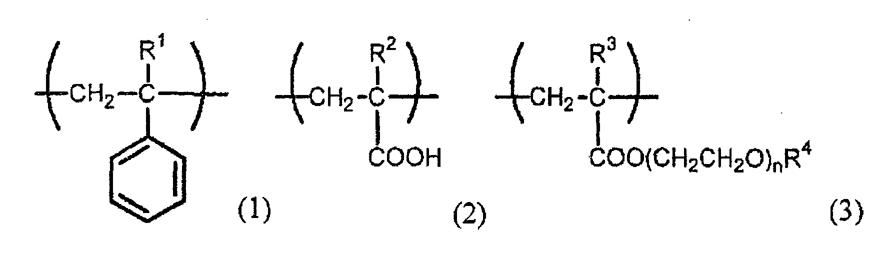 In Formulae (1) to (3), R¹, R², and R³ each independently represents a hydrogen atom or a methyl group; R⁴ represents an alkyl group having 1 to 10 carbon atoms; and n represents an integer of from 1 to 20.

### [Technical Problem]

When the aqueous inks described in JP-A Nos. 2007-91920 and 2003-165936 are each used as an ink composition, the ink composition can hardly be said to have sufficient dispersion stability or discharge reliability.
An aim of the present invention is to provide an inkjet ink composition which exhibits excellent dispersion stability and excellent discharge reliability and in which lowering of liquid repellency of an inkjet head member is suppressed, an ink set including the ink composition, and an image forming method.

### [Solution to Problem]

Exemplary embodiments according to the aspect of the invention include, but are not limited to the following items <1> to <10>.
<1> An inkjet ink composition including a pigment, a polymer compound, a water soluble organic solvent, a silicon compound and water, the polymer compound including a structural unit represented by the following Formula (1), a structural unit represented by the following Formula (2), and a structural unit represented by the following Formula (3); the water soluble organic solvent being a diol compound including a repetition structure formed from oxyalkylene groups having 2 or 3 carbon atoms; and the silicon compound being selected from the group consisting of colloidal silica and water-soluble alkali metal salts of silicic acid: 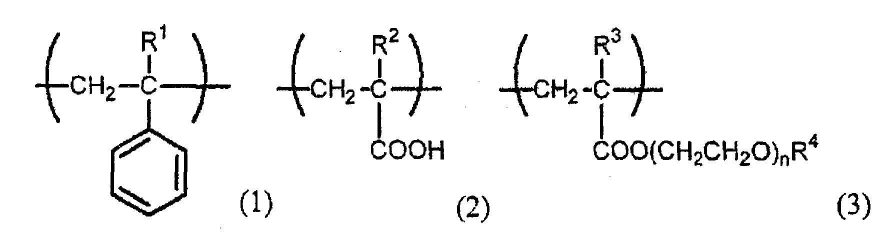 wherein, in Formulae (1) to (3), R¹, R², and R³ each independently represents a hydrogen atom or a methyl group; R⁴ represents an alkyl group having 1 to 10 carbon atoms; and n represents an integer of from 1 to 20.
<2> The inkjet ink composition according to the item <1>, wherein the silicon compound is selected from the group consisting of a sodium silicate, a potassium silicate, and colloidal silica having a volume average particle diameter of 100 nm or less.
<3> The inkjet ink composition according to the item <1> or the item <2>, further including a phosphoric acid ester surfactant.
<4> The inkjet ink composition according to any one of the items <1> to <3>, wherein a content of the silicon compound in the inkjet ink composition is in a range of from 0.01% by mass to 3% by mass.
<5> The inkjet ink composition according to any one of the items <1> to <4>, further including at least one selected from the group consisting of a urea and a urea derivative.
<6> The inkjet ink composition according to any one of the items <1> to <5>, further including resin particles.
<7> The inkjet ink composition according to any one of the items <1> to <6>, wherein a pH at 25°C of the inkjet ink composition is in a range of from 7.5 to 10.0.
<8> The inkjet ink composition according to any one of the items <1> to <7>, wherein a weight average molecular weight of the polymer compound is in a range of from 5,000 to 50,000.
<9> The inkjet ink composition according to any one of the items <1> to <8>, wherein an acid value of the polymer compound is in a range of from 25 mgKOH/g to 120 mgKOH/g.
<10> The inkjet ink composition according to the item <3>, wherein the phosphoric acid ester surfactant is a phosphoric acid ester represented by the following formula: 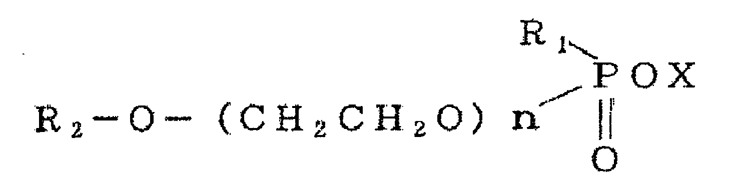 wherein, in the formula, R₁ represents -OX or R₂-O-(CH₂CH₂O)ₙ-; R₂ represents an alkyl group, alkenyl group, or alkylphenyl group having from 8 to 18 carbon atoms; n represents an integer of from 1 to 30; and X represents an alkali metal, an amine, or an alkanolamine.
<11> An ink set including the inkjet ink composition according to anyone of the items <1> to <10>, and a treatment liquid, the treatment liquid including a cationic polymer compound including a structural unit represented by the following Formula (4) or the following Formula (5): 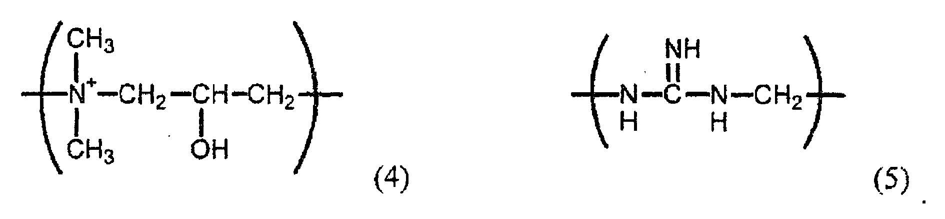
<12> A method of forming an image including discharging the inkjet ink composition according to any one of the items <1> to <10>, onto a recording medium by an inkjet process.
<13> The method of forming an image according to the item <12>, wherein the method further includes discharging a treatment liquid onto the recording medium, the treatment liquid including a cationic polymer compound including a structural unit represented by the following Formula (4) or the following Formula (5):

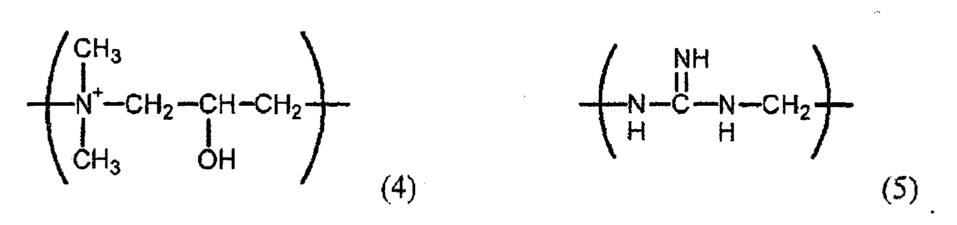

### [Advantageous Effects of Invention]

According to the present invention, an inkjet ink composition which exhibits excellent ink dispersion stability and excellent discharge reliability and in which lowering of liquid repellency of the inkjet head member is suppressed, an ink set including the ink composition, and an image forming method can be provided.

### BRIEF DESCRIPTION OF THE DRAWINGS

Exemplary embodiments of the present invention will be described in detail based on the following figures, wherein:
Fig. 1. is a schematic diagram showing one example of an internal structure of an inkjet head.
Fig. 2 is a schematic diagram showing one example of an alignment of ejection openings on a nozzle plate.

### DETALIED DESCRIPTION OF THE INVENTION

### <Inkjet ink composition>

The inkjet ink composition (hereinafter, may be merely referred to as the "ink composition") of the present invention is configured to include at least one pigment, at least one polymer compound (hereinafter, may be referred to as a "specific polymer compound") having a structural unit represented by the following Formula (1), a structural unit represented by the following Formula (2), and a structural unit represented by the following Formula (3), at least one water-soluble organic solvent (hereinafter, may be referred to as a "specific water-soluble organic solvent") which is a diol compound including a repetition structure formed from oxyalkylene groups having 2 or 3 carbon atoms, at least one silicon compound selected from the group consisting of colloidal silica and water-soluble alkali metal salts of silicic acid, and water. The ink composition of the present invention may further include, as necessary, at least one surfactant, at least one type of resin particles, at least one of urea or a urea derivative, or other additives.
When an ink composition having such configuration is used, excellent dispersion stability and excellent discharge reliability may be realized, and lowering of liquid repellency of an inkjet head member may be suppressed.

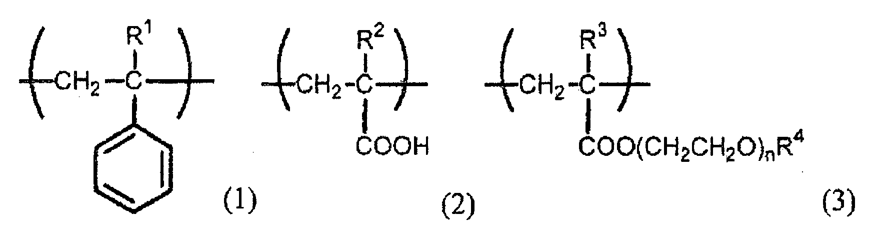

In Formulae (1) to (3), R¹, R², and R³ each independently represent a hydrogen atom or a methyl group. R⁴ represents an alkyl group having from 1 to 10 carbon atoms, n represents an integer of from 1 to 20.

### [Pigment]

The ink composition of the present invention contains at least one pigment as a coloring material component. The pigment is not particularly limited and may be selected as appropriate according to the purposes. For example, the pigment may be an organic pigment or an inorganic pigment. It is preferable that the pigment is substantially insoluble in water or slightly soluble in water, from the viewpoint of ink coloring property.

Examples of the organic pigment include azo pigments, polycyclic pigments, dye chelates, nitro pigments, nitroso pigments, and aniline black. Among them, azo pigments and polycyclic pigments are more preferable. Examples of the inorganic pigments include titanium oxide, iron oxide, calcium carbonate, barium sulfate, aluminium hydroxide, barium yellow, cadmium red, chrome yellow, and carbon black. Among them, carbon black is especially preferable.

Specific examples of the pigment, which can be used in the present invention, include the pigments described in paragraphs [0142] to [0145] of JP-A No. 2007-100071.
One of the pigments may be used alone, or two or more of them may be used in combination.

The content of the pigment is preferably from 1% by mass to 25% by mass, more preferably from 2% by mass to 20% by mass, even more preferably from 5% by mass to 20% by mass, and particularly preferably from 5% by mass to 15% by mass, with respect to the total mass of the ink composition.

While the ink composition of the present invention contains a pigment as the coloring material, the ink composition may further contain a dye, if necessary. In the case of using a dye as the coloring material, a dye held by a water-insoluble carrier can be used as water-insoluble colored particles. As the dye, known dyes can be used without any particular limitation. For example, the dyes described in JP-A Nos. 2001-115066, 2001-335714, and 2002-249677, and the like can be preferably used also in the present invention. Further, the carrier is not particularly limited so long as the carrier is insoluble in water or slightly soluble in water, and an inorganic material, an organic material, or a complex material thereof may be used. Specifically, the carriers described in JP-A Nos. 2001-181549 and 2007-169418, and the like can be preferably used also in the present invention.
The carrier (water-insoluble colored particles) that holds a dye can be used in the form of a water-based dispersion by using a dispersant. As the dispersant, the dispersant described below may preferably be used.

### [Specific polymer compound]

The ink composition of the present invention contains a polymer compound including at least one type of structural unit represented by Formula (1) described below, at least one type of structural unit represented by Formula (2) described below, and at least one type of structural unit represented by Formula (3) described below.
The specific polymer compound in the present invention is used, for example, as a dispersant for dispersing the above pigment. When the pigment is dispersed by using such a specific polymer compound, dispersion stability of the pigment may become excellent, and discharge reliability may be enhanced.

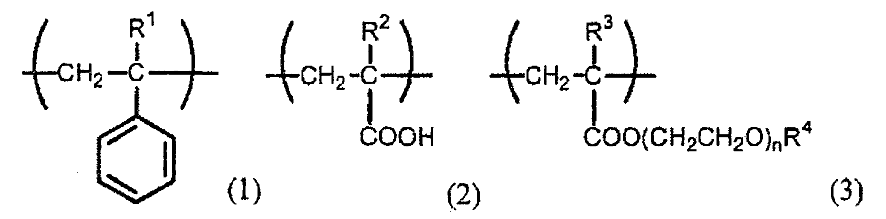

In Formula (1) to Formula (3), R¹, R², and R³ each independently represent a hydrogen atom or a methyl group. R⁴ represents an alkyl group having from 1 to 10 carbon atoms, and preferably represents an alkyl group having from 1 to 5 carbon atoms.
n represents an integer of from 1 to 20, and preferably represents an integer of from 3 to 10.

The specific polymer compound may include two or more types of structural units represented by Formula (1) above, two or more types of structural units represented by Formula (2) above, or two or more types of structural units represented by Formula (3) above.

The specific polymer compound may further include an additional structural unit other than the structural units represented by the above Formula (1) to Formula (3).
The additional structural unit is not particularly limited, so long as the additional structural unit is derived from a monomer copolymerizable with the monomer that forms the structural unit represented by the above Formula (1) to Formula (3). Specifically, examples thereof may include (meth)acrylic acid esters, (meth)acrylamides, and unsaturated polyvalent carboxylic acids.

Further, as to the content ratio of the structural units represented by the above Formula (1) to Formula (3), for example, it is preferred that the specific polymer compound includes from 10% by mass to 90% by mass of the structural unit represented by Formula (1), from 5% by mass to 50% by mass of the structural unit represented by Formula (2), and from 0.5% by mass to 10% by mass of the structural unit represented by Formula (3), with respect to the total mass of the specific polymer compound. It is more preferred that the specific polymer compound includes from 50% by mass to 80% by mass of the structural unit represented by Formula (1), from 20% by mass to 40% by mass of the structural unit represented by Formula (2), and from 1% by mass to 5% by mass of the structural unit represented by Formula (3).

The weight average molecular weight of the specific polymer compound is preferably from 3,000 to 100, 000, more preferably from 5,000 to 50,000, even more preferably from 5,000 to 40,000, and particularly preferably from 10,000 to 40,000.

The acid value of the specific polymer compound (in some case, it may be also referred as polymer dispersant) is preferably 130 mgKOH/g or less, from the viewpoint of providing good coagulation properties when the ink composition is brought into contact with a treatment liquid. The acid value is more preferably from 25 mgKOH/g to 120 mgKOH/g and even more preferably from 25 mgKOH/g to 100 mgKOH/g.
When the acid value of the specific polymer compound is 130 mgKOH/g or less, or further, 100 mgKOH/g or less, the pigment becomes relatively hydrophobic, and water resistance of the image may become good. When the acid value of the specific polymer compound is 25 mgKOH/g or more, stability of the self dispersibility may become good.

Specific examples of the specific polymer compound according to the present invention include the compound shown below. However, it should be understood that the invention is not limited thereto.

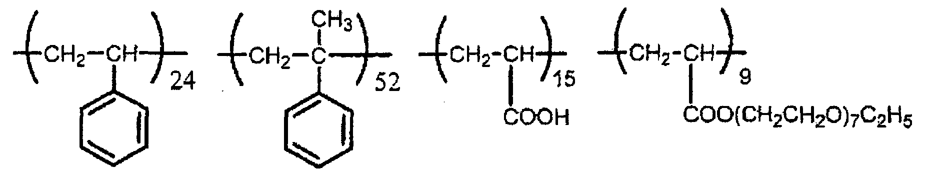

Concerning the content of the specific polymer compound in exemplary embodiments of the invention, the mixing mass ratio (p : s) of the pigment (p) and the specific polymer compound (s) is preferably in a range of from 1 : 0.06 to 1 : 3, more preferably in a range of from 1 : 0.125 to 1 : 2, and even more preferably in a range of from 1 : 0.125 to 1 : 1.5.

In the present invention, the ink composition may include an additional dispersant, as necessary. For example, a conventionally known water-soluble low molecular weight dispersant, a water-soluble polymer, or the like may be used as the additional dispersant.
The additional dispersant may be used in an amount such that the content of the additional dispersant other than the specific polymer compound is within the range of the content of the specific polymer compound.

### [Specific water-soluble organic solvent]

The ink composition of the present invention contains at least one water-soluble organic solvent (specific water-soluble organic solvent) which is a diol compound including a repetition structure formed from oxyalkylene groups having 2 or 3 carbon atoms. The specific water-soluble organic solvent may be formed from oxyalkylene groups having two carbon atoms (oxyethylene groups), may be formed from oxyalkylene groups having three carbon atoms (oxypropylene groups), or may be formed from (an) oxyethylene group(s) and (an) oxypropylene group(s).

The repetition number of the oxyalkylene groups having 2 or 3 carbon atoms is not particularly limited. For example, the repetition number is from 1 to 20, but is preferably from 2 to 10, and more preferably from 2 to 5.
Specific examples of the specific water-soluble organic solvent in the present invention may include diethylene glycol, triethylene glycol, tetraethylene glycol, hexaethylene glycol, dipropylene glycol, tripropylene glycol, tetrapropylene glycol, and polypropylene glycol (in which the repetition number of PPO (propylene oxide) is from 5 to 15).

The content of the specific water-soluble organic solvent in the ink composition in exemplary embodiments of the invention is, for example, from 2% by mass to 40% by mass, with respect to the total mass of the ink composition, but the content is preferably from 3% by mass to 30% by mass, and more preferably from 4% by mass to 25% by mass.
In the present invention, one of the specific water-soluble organic solvents may be used alone, or two or more of them may be used in combination.

The inkjet ink composition in exemplary embodiments of the invention may include an additional water-soluble organic solvent other than the specific water-soluble organic solvent, in addition to the specific water-soluble organic solvent. As the additional water-soluble organic solvent, a water-soluble organic solvent that is usually used can be used without any particular limitation. One of these additional water-soluble organic solvents may be used alone, or two or more of them may be used in combination. Specific examples of the additional water-soluble organic solvents include:
alcohols (for example, methanol, ethanol, propanol, isopropanol, butanol, isobutanol, sec-butanol, t-butanol, pentanol, hexanol, cyclohexanol, and benzyl alcohol),
polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, 2-methyl-1,3-propanediol, glycerin, hexanetriol, trimethylolpropane, thiodiglycol, dithioglycol, and acetylene glycol derivatives),
glycol derivatives (for example, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, dipropylene glycol monomethyl ether, triethylene glycol monomethyl ether, triethylene glycol monobutyl ether, ethylene glycol diacetate, ethylene glycol monomethyl ether acetate, triethylene glycol monoethyl ether, and ethylene glycol monophenyl ether),
amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and
other polar solvents (for example, formamide. N,N-dimethylformamide, N,N-dimethylacetamide, dimethylsulfoxide, sulfolane, 3-sulfolene, 2-pyrrolidone, N-methyl-2-pyrrolidone, N-vinyl-2-pyrrolidone, 2-oxazolidone, 1,3-dimethyl-2-imidazolidinone, acetonitrile, and acetone).

### (Water)

The ink composition of the present invention contains water. There is no particular limitation as to the amount of water. In the present invention, the content of water is preferably from 10% by mass to 99% by mass, more preferably from 30% by mass to 80% by mass, and even more preferably from 50% by mass to 70% by mass.

### [Silicon compound]

The ink composition of the present invention contains at least one silicon compound selected from the group consisting of colloidal silica and water-soluble alkali metal salts of silicic acid. By incorporation of the silicon compound, an inkjet ink composition which exhibits excellent dispersion stability and excellent discharge reliability and in which lowering of liquid repellency of an inkjet head member is suppressed, may be obtained.
A single silicon compound may be incorporated in the ink composition, or a combination of two or more silicon compounds may be incorporated in the ink composition. Further, either of colloidal silica or a water-soluble alkali metal salt of silicic acid may be incorporated in the ink composition, or both of colloidal silica and a water-soluble alkali metal salt of silicic acid may be incorporated in the ink composition.

### [Colloidal silica]

Colloidal silica is colloid that includes fine particles of inorganic oxides including silicon, in which an average particle diameter of the fine particles is several hundred nm or less. Colloidal silica includes silicon dioxide (including hydrates thereof) as a main component and may contain aluminate as a minor component. Examples of the aluminate, which may be contained as a minor component, include sodium aluminate and potassium aluminate.
Further, inorganic salts such as sodium hydroxide, potassium hydroxide, lithium hydroxide, and ammonium hydroxide or organic salts such as tetramethylammonium hydroxide may be contained in the colloidal silica. These inorganic salts and organic salts function, for example, as a stabilizer of colloid.

The dispersing medium for colloidal silica is not particularly limited and may be any of water, an organic solvent, or a mixture of water and an organic solvent. The organic solvent may be a water-soluble organic solvent or a water-insoluble organic solvent. However, the organic solvent is preferably a water-soluble organic solvent. Specific examples thereof include methanol, ethanol, isopropyl alcohol, and n-propanol.

There is no particular limitation on the method for producing colloidal silica, and colloidal silica can be produced by a generally used method. For example, colloidal silica can be produced through an Aerosil synthesis by thermal decomposition of silicon tetrachloride, or may be produced from water glass. Alternatively, colloidal silica can be produced according to a liquid phase synthesis method including hydrolysis of an alkoxide (see, for example, "Seni to Kogyo", vol. 60, No. 7, page 376, 2004), or the like.

There is no particular limitation on the average particle diameter of the particles contained in the colloidal silica according to the present invention. For example, the average particle diameter may be set from 1 nm to 200 nm. The average particle diameter is preferably from 1 nm to 100 nm, more preferably from 3 nm to 50 nm, even more preferably from 3 nm to 25 nm, and particularly preferably from 5 nm to 20 nm.
When the average particle diameter is 200 nm or less, damages (for example, lowering of liquid repellency or the like) caused by ink to the members which construct the inkjet head, such as a substrate, a protective film, a liquid-repellent film, and the like, may be more effectively suppressed. It is thought that, by making the average particle diameter smaller, a total surface area of particles increases, so that damages to the members which construct the inkjet head is more effectively suppressed. Moreover, it is preferable that the average particle diameter of the particles is 200 nm or less, also from the viewpoints of discharge reliability of the ink composition and suppression of the abrasive effect caused by the particles. Further, when the average particle diameter is I nm or more, productivity is enhanced, and colloidal silica that exhibits a smaller dispersion in performance may be obtained.

In the present invention, the average particle diameter of the colloidal silica is represented by a volume average particle diameter. The volume average particle diameter can be determined according to a general method for dispersed particles such as a light scattering method or a laser diffraction method.
The shape of the colloidal silica is not particularly limited so long as it does not disturb the ejection performance of the ink. For example, the shape may be a spherical shape, a long shape, a needle-like shape, or a shape like a string of beads. Above all, it is preferred that the colloidal silica is spherical, from the viewpoint of discharge reliability of ink.

The colloidal silica, which can be used in the present invention, may be produced by the production method described above, or may be a commercially available product. Specific examples of the commercially available product include LUDOX AM, LUDOX AS, LUDOX LS, LUDOX TM, and LUDOX HS (all trade names, manufactured by E.I. Du Pont de Nemours & Co.); SNOWTEX S, SNOWTEX XS, SNOWTEX 20, SNOWTEX 30, SNOWTEX 40, SNOWTEX N, SNOWTEX C, and SNOWTEX O (trade names, all manufactured by Nissan Chemical Industries, Ltd.); SYTON C-30 and SYTON ZOO (trade names, all manufactured by Monsanto Co.); NALCOAG-1060 and NALCOAG-ID21 to 64 (all trade names, manufactured by Nalco Chem. Co.); METHANOL SOL, IPA SOL, MEK SOL, and TOLUENE SOL (all trade names, manufactured by Fuso Chemical Co., Ltd.), CATALOID-S, CATALOID-F120, CATALOID SI-350, CATALOID SI-500, CATALOID SI-30, CATALOID S-20L, CATALOID S-20H, CATALOID S-30L, CATALOID S-30H, CATALOID SI-40, and OSCAL-1432 (isopropyl alcohol sol) (trade names, all manufactured by JGC Catalysts and Chemicals Ltd.); ADELITE (trade name, manufactured by Asahidenka Co., Ltd.); and, as examples of colloidal silica in the shape of a string of beads, SNOWTEX ST-UP, SNOWTEX PS-S, SNOWTEX PS-M, SNOWTEX ST-OUP, SNOWTEX PS-SO, and SNOWTEX PS-MO (trade names, all manufactured by Nissan Chemical Industries, Ltd.). These products are easily available.

The pH of the above commercially available colloidal silica dispersion liquid is often adjusted to pH of acidic or alkaline. This is because the region where colloidal silica is stably dispersed exists in an acidic side or alkaline side. In the case of adding a commercially available colloidal silica dispersion liquid to the ink composition, the pH of the region where the colloidal silica is stably dispersed and the pH of the ink composition should be taken in consideration.

The content of the colloidal silica in the ink composition in exemplary embodiments of the invention is not particularly limited. For example, the content can be set from 0.0001 % by mass to 10% by mass of the total amount of the ink composition. The content of the colloidal silica is preferably from 0.01 % by mass to 3% by mass of the total amount of the ink composition, more preferably from 0.02% by mass to 0.5% by mass of the total amount of the ink composition, and particularly preferably from 0.03% by mass to 0.2% by mass of the total amount of the ink composition. When the content of the colloidal silica in the ink composition is equal to or less than the upper limit described above, the discharge reliability of the ink composition is further enhanced, and the influence of the abrasive effect caused by silica particles upon the inkjet head may be more effectively suppressed. Further, when the content is equal or greater than the lower limit described above, the lowering of liquid repellency of the inkjet head member may be more effectively suppressed.

Moreover, it is preferable that the ink composition of the present invention preferably contains colloidal silica having a volume average particle diameter of 100 nm or less in an amount of from 0.01% by mass to 3% by mass of the total amount of the ink composition, and more preferably contains colloidal silica having a volume average particle diameter of from 3 nm to 25 nm in an amount of from 0.01% by mass to 3% by mass of the total amount of the ink composition, from the viewpoints of suppression of the lowering of liquid repellency of the inkjet head member and the ink discharge reliability. It is even more preferable that the ink composition contains colloidal silica having a volume average particle diameter of from 5 nm to 20 nm in an amount of from 0.03% by mass to 0.2% by mass of the total amount of the ink composition.

### (Alkali metal salt of silicic acid)

The inkjet ink composition of the present invention contains at least one of colloidal silica and water-soluble alkali metal salt of silicic acid. The water-soluble alkali metal salt of silicic acid is not particularly limited, so long as the alkali metal salt of silicic acid is a compound which is formed from silicic acid and an alkali metal, and has solubility with respect to water. The water-soluble alkali metal salt of silicic acid may be any of an alkali metal salt of metasilicic acid, an alkali metal salt of orthosilicic acid, or the like, or may be a mixture thereof.
In the present invention, it is necessary that the silicate is an alkali metal salt of silicic acid. When a salt with a substance other than an alkali metal, for example, an ammonium salt of silicic acid (for example, a tetramethylammonium salt of silicic acid) or the like, is used, there are cases in which ink dispersion stability is deteriorated. Further, when an ammonium salt or the like, which may generate a volatile compound, is used, there are cases in which an odor is caused with time.

It is preferable that the silicic acid alkali metal salt be specifically at least one kind of the compounds represented by the following Formula (S) below.

x (M₂O)· y (SiO₂) Formula (S)

In Formula (S), M represents sodium or potassium; x represents an integer of 1 or 2; and y represents an integer of 1 to 4. The alkali metal salt of silicic acid represented by the Formula (S) is called metasilicic acid alkali metal salt in the case of x = 1, y = 1, and orthosilicic alkali metal salt in the case of x=2, y= 1, respectively, all of which are silicic acid alkali metal salt having a water solubility.

Generally, a silicic acid alkali metal salt is often a mixture including two or more kinds of compounds represented by the Formula (S), but the silicic acid alkali metal salt used in the present invention may be one kind of compound represented by the Formula (S) or a mixture including two or more kinds of compounds represented by the Formula (S).
In the present invention, examples of the water-soluble silicic acid alkali metal salt may include commercially available compounds (for example, liquid glass), and also may include substances obtained by melting silicic acid and a carbonate or hydroxide of an alkali metal, but a commercially available compound of sodium silicate or potassium silicate is preferable from the viewpoint of ink dispersion stability.

The content of the silicic acid alkali metal salt in the ink composition for an inkjet use according to the present invention is not particularly limited, but the content is preferably from 0.01% by mass to 3.0% by mass with respect to the total amount of the ink composition, and more preferably from 0.02% by mass to 0.2% by mass, and still more preferably from 0.03% by mass to 0.1 % by mass from the viewpoint of suppression of the lowering of liquid repellency. When the content is in the above range, improvement in the suppression of the lowering of liquid repellency can be achieved effectively.

Furthermore, the ink composition according to the present invention preferably contains at least one kind of silicic acid alkali metal salt represented by the Formula (S) in a range of from 0.01 % by mass to 3.0% by mass with respect to the total amount of the ink composition, and more preferably contains at least one kind selected from sodium silicate and potassium silicate in a range of from 0.02% by mass to 0.2% by mass with respect to the total amount of the ink composition from the viewpoints of suppression of the lowering of liquid repellency of the inkjet head member and the ink dispersion stability.

### [Surfactant]

The inkjet ink composition in exemplary embodiments of the invention preferably contains at least one surfactant. Examples of the surfactant include a nonionic surfactant, a cationic surfactant, an anionic surfactant, and a betaine surfactant.
The addition amount of the surfactant is preferably within the range of addition amounts that can adjust the surface tension of the ink composition to 20 mN/m to 60 mN/m, more preferably within the range of addition amounts that can adjust the surface tension of the ink composition to 20 mN/m to 45 mN/m, and even more preferably within the range of addition amounts that can adjust the surface tension of the ink composition to 25 mN/m to 40 mN/m. When the addition amount is within the range described above, the ink composition can be satisfactorily spotted in accordance with an inkjet method.

Specific examples of the surfactant as a hydrocarbon type preferably include anionic surfactants such as fatty acid salts, alkyl sulfuric acid ester salts, alkyl benzenesulfonates, alkyl naphthalenesulfonates, dialkyl sulfosuccinates, alkyl phosphoric acid ester salts, naphthalenesulfonic acid-formalin condensates and polyoxyethylene alkyl sulfuric acid salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester and oxyethylene oxypropylene block copolymer. OLFINE (trade name, surfactant, manufactured by Nisshin Chemical Industry Co., Ltd.) and SURFYNOLS (trade name, products of Air Products & Chemicals) which are an acetylene type polyoxyethylene oxide surfactant) are preferably used. Furthermore, amine oxide type amphoteric surfactants such as N, N-dimethyl-N-alkyl amine oxide are preferred.
Additionally, materials described on pages (37) to (38) of JP-A No. 59-157636 and Research Disclosure No. 308119 (1989) as surfactants can be used.
When fluorocarbon (alkyl fluoride type) surfactants, silicone surfactants or the like, such as those described in JP-A Nos. 2003-322926, 2004-325707 and 2004-309806 are used, abrasion resistance can be improved.
Among the above surfactants, it is more preferable that the ink composition contains at least one phosphoric acid ester surfactant, from the viewpoint of ink storage stability. By incorporation of a phosphoric acid ester surfactant, the lowering of liquid repellency of the inkjet head member can be more effectively suppressed.

### (Phosphoric acid ester surfactant)

There is no particular limitation as to the phosphoric acid ester surfactant, so long as the phosphoric acid ester surfactant is a surfactant having a phosphoric acid ester structure.
It is preferable that the phosphoric acid ester surfactant has at least one ethyleneoxy group, it is more preferable that the surfactant has 2 or more ethyleneoxy groups, and it is even more preferable that the surfactant has 4 or more ethyleneoxy groups.
Specific examples thereof include phosphoric acid ester surfactants that are commercially available under the trade names of EMPHOS (registered trade mark), DESOPHOS (trade mark), HOSTAPHAT (registered trade mark), ESI-TERGE (registered trade mark), EMULGEN (registered trade mark), CRODAFOS (trade mark), DEPHOTROPE (trade mark), and DEPHOS (trade mark), which are available from Witoco Corp. (Middlebury, Connecticut, USA), Clariant GmbH (Frankfurt, Germany), Cook Composites and Polymers Co. (Kansas City, Missouri, USA), Kao Specialties Americas LLC (High Point, Nalco), Croda Inc. (Parsippany, New Jersey, USA), or DeForest Enterprises Inc. (Boca Raton, Florida, USA).

More specifically, examples of the phosphoric acid ester surfactant may include CRODAFOS (trade mark) N-3 ACID, EMPHOS (registered trade mark) 9NP, EMPHOS (registered trade mark) CS121, EMPHOS (registered trade mark) CS131, EMPHOS (registered trade mark) CS141, EMPHOS (registered trade mark) CS1361, HOSTAPHAT (registered trade mark) LPKN, ESI-TERGE (registered trade mark) 320, ESI-TERGE (registered trade mark) 330, DEPHOS (trade mark) 8028, EMULGEN (registered trade mark) BL-2PK, DESOPHOS (trade mark) 4P, DESOPHOS (trade mark) 6DNP, DESOPHOS (trade mark) 6MPNA, DESOPHOS (trade mark) 6NPNA, DESOPHOS (trade mark) 8DNP, DESOPHOS (trade mark) 9NP, DESOPHOS (trade mark) 10TP, DESOPHOS (trade mark) 14DNP, DESOPHOS (trade mark) 30NP, and DEPHOTROPE (trade mark) CAS-MF.
Furthermore, examples of the phosphoric acid ester surfactant may include oleth-3 phosphates, nonylphenol ethoxylate phosphoric acid esters, salts of a nonylphenol ethoxylate phosphoric acid ester, organophosphates, aliphatic phosphoric acid ester, a phosphated nonylphenoxy polyethoxy ethanol, and salts of an ethylhexanol ethoxylated phosphoric acid ester ("2EH-2EO").

Among them, it is preferable that the phosphoric acid ester surfactant is DEPHOTROPE (trade mark) CAS-MF, EMPHOS (registered trade mark) 9NP, EMPHOS (registered trade mark) CS121, EMPHOS (registered trade mark) CS131, EMPHOS (registered trade mark) CS141, EMPHOS (registered trade mark) CS1361, ESI-TERGE (registered trade mark) 320, or ESI-TERGE (registered trade mark) 330.

Moreover, the phosphoric acid ester surfactant is particularly preferably a phosphoric acid ester having the following structure.

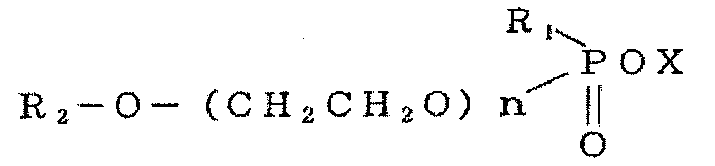

In the structural formula, R₁ represents -OX or R₂-O-(CH₂CH₂O)ₙ-, and R₂ represents an alkyl group, alkenyl group, or alkylphenyl group having from 8 to 18 carbon atoms. n represents an integer of from 1 to 30. X represents an alkali metal, amine, or alkanolamine.

Specific examples of the phosphoric acid ester represented by the above structural formula include an alkali metal salt of a phosphoric acid monoester of polyoxyethylene alkyl ether, an alkali metal salt of a phosphoric acid monoester of polyoxyethylene alkylphenyl ether, an alkali metal salt of a phosphoric acid diester of polyoxyethylene alkyl ether, and an alkali metal salt of a phosphoric acid diester of polyoxyethylene alkylphenyl ether. Here, examples of the alkali metal include sodium and potassium.

Further, specific examples of the phosphoric acid ester represented by the above structural formula include an amine salt of a phosphoric acid monoester of polyoxyethylene alkyl ether, an amine salt of a phosphoric acid monoester of polyoxyethylene alkylphenyl ether, an amine salt of a phosphoric acid diester of polyoxyethylene alkyl ether, and an amine salt of a phosphoric acid diester of polyoxyethylene alkylphenyl ether.

In addition, specific examples thereof further include an alkanolamine salt of a phosphoric acid monoester of polyoxyethylene alkyl ether, an alkanolamine salt of a phosphoric acid monoester of polyoxyethylene alkylphenyl ether, an alkanolamine salt of a phosphoric acid diester of polyoxyethylene alkyl ether, and an alkanolamine salt of a phosphoric acid diester of polyoxyethylene alkylphenyl ether.

More specifically, examples of the phosphoric acid ester represented by the above structural formula may include "PHOSPHANOL PE-510", "PHOSPHANOL ML-220", "PHOSPHANOL RA-600", and "PHOSPHANOL RE-610" (trade names, all manufactured by TOHO Chemical Industry Co., Ltd.) and "PLYSURF A212E", "PLYSURF A215C", and "PLYSURF A210G" (trade names, all manufactured by DAI-ICHI KOGYO SEIYAKU CO., LTD.).

The content of the phosphoric acid ester surfactant is preferably from 0.1% by mass to 3% by mass, more preferably from 0.2% by mass to 3% by mass, and even more preferably from 0.2% by mass to 0.5% by mass, with respect to the total mass of the ink composition.

### [Urea and urea derivative]

The ink composition of the present invention preferably contains at least one of urea or a urea derivative (hereinafter, may be referred to as a "urea compound"). Urea and urea derivatives have a high moisture retention capability, and therefore can effectively suppress undesired drying or solidification of ink, as a solid moistening agent. Further, in the present invention, incorporation of at least one of urea or a urea derivative, in addition to the at least one of colloidal silica or a water-soluble alkali metal salt of silicic acid, may results in effective improvement in maintenance properties of the inkjet head and the like.

Examples of the urea derivative include a compound obtained by substituting a hydrogen atom on the nitrogen of urea by an alkyl group or an alkanol group, thiourea, and a compound obtained by substituting a hydrogen atom on the nitrogen of thiourea by an alkyl group or an alkanol group. The alkyl groups on the nitrogen atom of urea or thiourea may link together to form a ring.
Specific examples of the urea derivative include N,N-dimethylurea, thiourea, ethyleneurea, hydroxyethylurea, hydroxybutylurea, ethylenethiourea, and diethylthiourea.

The content of the urea compound in the ink composition in exemplary embodiments of the invention is preferably from 1% by mass to 20% by mass, more preferably from 1% by mass to 15% by mass, and even more preferably from 3% by mass to 10% by mass, from the viewpoints of improvement in maintenance properties (removability by wiping off) and the like.
Here, in a case in which two or more urea compounds are incorporated in the ink composition, it is enough that the total amount of the two or more urea compounds is within the above range.

In the ink composition in exemplary embodiments of the invention, the ratio of the content of the urea compound to the content of the silicon compound is not particularly limited, but the content ratio of the urea compound relative to the silicon compound (urea compound / silicon compound) is preferably from 5 to 1,000, more preferably from 10 to 500, and even more preferably from 20 to 200.

There is no particular limitation concerning the combination of the content of the urea compound and the content of the silicon compound. However, from the viewpoint of more effectively achieving both of the removability by wiping off and image fixability, the following combinations are preferable.
Namely, it is preferable that the content of the urea compound is 1.0% by mass or more and the content of the silicon compound is 0.01% by mass or more. It is more preferable that the content of the urea compound is from 1.0% by mass to 20% by mass and the content of the silicon compound is from 0.02% by mass to 0.5% by mass. Further, it is particularly preferable that the content of the urea compound is from 3.0% by mass to 10% by mass and the content of the silicon compound is from 0.03% by mass to 0.2% by mass.

### (Solid moistening agent)

The ink composition in exemplary embodiments of the invention may further contain a solid moistening agent other than the urea compound. In the present invention, the term "solid moistening agent" refers to a water-soluble compound which has water retention capability and is solid at 25°C.

General solid moistening agents for use in aqueous ink compositions, as they are, may be utilized as the solid moistening agent that can be used in the present invention. Specific examples thereof include polyhydric alcohols such as saccharides, sugar alcohols, hyaluronic acids, trimethylolpropane, and 1,2,6-hexanetriol.

Examples of the saccharides include monosaccharides, disaccharides, oligosaccharides (including trisaccharides and tetrasaccharides), and polysaccharides. Specific examples thereof include glucose, mannose, fructose, ribose, xylose, arabinose, galactose, aldonic acid, glucitol, maltose, cellobiose, lactose, sucrose, trehalose, and maltotriose. As used herein, the term "polysaccharide" refers to a sugar in a broad sense, and encompasses substances widely spread in nature, such as alginic acid, α-cyclodextrin, and cellulose. Examples of derivatives of saccharides include reducing sugars (for example, sugar alcohols) of the above saccharides, and oxidized sugars (for example, aldonic acid, uronic acid, amino acid, and thiosugars) of the above saccharides. In particular, sugar alcohols are preferable, and specific examples thereof include maltitol, sorbitol, and xylitol. As hyaluronic acids, for example, a product that is commercially available under the name of SODIUM HYALURONATE 1% AQUEOUS SOLUTION (molecular weight 350,000) may be used.

### [Resin particles]

The ink composition in exemplary embodiments of the invention preferably contains at least one type of resin particles. When resin particles are incorporated, ink fixability and abrasion resistance of the images may be further improved.
Examples of the resin particles or the resin included in polymer latex, which can be used in the present invention, include an acrylic resin, a vinyl acetate resin, a styrene-butadiene resin, a vinyl chloride resin, an acryl-styrene resin, a butadiene resin, a styrene resin, a crosslinked acrylic resin, a crosslinked styrene resin, a benzoguanamine resin, a phenol resin, a silicone resin, an epoxy resin, a urethane resin, a paraffin resin, and a fluorocarbon resin. Among them, preferable examples thereof may include an acrylic resin, an acryl-styrene resin, a styrene resin, a crosslinked acrylic resin, and a crosslinked styrene resin.

The resin included in resin particles preferably have a weight average molecular weight of from 10,000 to 200,000, and more preferably from 100,000 to 200,000.
The average particle diameter of the resin particles is preferably in a range of from 10 nm to 1 µm, more preferably in a range of from 10 nm to 200 nm, even more preferably in a range of from 20 nm to 100 nm, and particularly preferably in a range of from 20 nm to 50 nm.
The glass transition temperature Tg of the resin particles is preferably 30°C or higher, more preferably 40°C or higher, and even more preferably 50°C or higher.

The addition amount of the resin particles is preferably from 0.5% by mass to 20% by mass, more preferably from 3% by mass to 20% by mass, and even more preferably from 5% by mass to 15% by mass, with respect to the ink.
There is no particular limitation concerning the particle diameter distribution of the resin particles, and the particles may exhibit a wide particle diameter distribution or may exhibit a monodispersed particle diameter distribution. Further, a mixture of two or more types of resin particles each having a monodispersed particle diameter distribution may also be used.

### Other additives

The ink composition used in the present invention may further include other additives than the aforementioned components, such as known additives including a polymerization inhibitor, an anti-drying agent (moistener), an anti-fading agent, an emulsion stabilizer, a penetration enhancing agent, a UV absorber, an antiseptic agent, an mildew-proofing agent, a pH adjuster, a surface-tension controller, an antifoam agent, a viscosity adjuster, a dispersion stabilizer, an antirust agent and a chelating agent.

The use of the UV absorber may improve the storability of an image, and examples of the UV absorber include: benzotriazole compounds such as those described in JP-A Nos. 58-185677, 61-190537, 2-782, 5-197075 and 9-34057; benzophenone compounds such as those described in JP-ANos. 46-2784, and 5-194483 and US Patent No. 3,214,463; cinnamic compounds such as those described in Japanese Patent Nos. 48-30492, and 56-21141 and JP-ANo. 10-88106; triazine compounds such as those described in JP-A No. 4-298503, 8-53427, 8-239368, 10-182621 and Japanese Patent Application National phase Publication No. 8-501291; compounds described in Research Disclosure No. 24239; and so-called fluorescent brighteners that emit fluorescent light upon absorption of UV rays, such as stilbene compounds and benzoxazole compounds.

The anti-fading agent may be used for improving the storability of an image, and examples thereof include an organic anti-fading agent and a metal complex anti-fading agent. Examples of the organic anti-fading agent include hydroquinones, alkoxyphenols, dialkoxyphenols, phenols, anilines, amines, indanes, chromanes, alkoxyanilines and heterocyclic compounds. Examples of the metal complex anti-fading agent include nickel complexes and zinc complexes. More specifically, examples of usable antifading agents include those described in the patents cited in Research Disclosure No. 17643, Section VII, Items I to J; Research Disclosure No. 15162; No. 18716, page 650, left column; Research Disclosure No. 36544, page 527; No. 307105, page 872; Research Disclosure No. 15162; and compounds within the scope of the chemical formulae and examples of representative compounds described in pages 127 to 137 of JP-A No. 62-215272.

Examples of the mildew-proofing agents include sodium dehydroacetate, sodium benzoate, sodium pyridinethion-1-oxide, ethyl p-hydroxybenzoate,
1,2-benzoisothiazolin-3-one, and salts thereof. The content of the mildew-proofing agent is preferably from 0.02 to 1.00 mass% with respect to the ink composition.

Examples of the pH adjuster include a neutralizer such as an organic base or an inorganic alkali. The pH adjuster may improve the storability of the ink composition. The pH adjuster is preferably added at such an amount that the pH at 25°C of the ink composition becomes from 6.0 to 10.0, more preferably from 7.5 to 10.0.

The viscosity, at 20°C, of the inkjet ink composition in exemplary embodiments of the invention is preferably in a range of from 2.0 mPa·s to 10.0 mPa·s, and more preferably in a range of from 2.0 mPa·s to 5.0 mPa·s.
Here, the viscosity is a value measured at 20°C using an E type viscometer. Specifically, the viscosity is measured using VISCOMETER TV-22 (trade name, manufactured by TOKI SANGYO CO., LTD.).

### <Ink set>

The ink set of the present invention is configured to include at least one ink composition described above and at least one treatment liquid including an aggregating agent which can form an aggregate when the treatment liquid is in contact with the ink composition.
By using the treatment liquid together with the ink composition, inkjet recording may be speeded up and, even when a high-speed recording is performed, an image having high density, high resolution, and excellent imaging characteristics (for example, reproducibility of fine lines or fine image areas) may be obtained.

### (Treatment liquid)

The treatment liquid in the present invention is configured to include at least one aggregating agent, which can form an aggregate when the treatment liquid is in contact with the ink composition, and an aqueous medium. The treatment liquid may further include other components, if necessary.
There is no particular limitation as to the aggregating agent, so long as the aggregating agent can form an aggregate when contacting with the ink composition. The aggregating agent is preferably at least one cationic polymer compound, and more preferably at least one cationic polymer compound having a structural unit represented by the following Structural Formula (4) or Structural Formula (5).

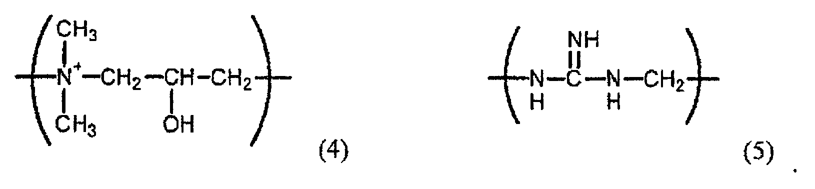

Examples of the aggregating agent incorporated in the treatment liquid may include cationic polymer compounds, acidic compounds, and polyvalent metal salts. In the present invention, the treatment liquid preferably contains at least one cationic polymer compound as the aggregating agent, from the viewpoint of aggregation rate.

As the cationic polymer compound, a polymer having, as a cationic group, a primary to tertiary amino group or a quaternary ammonium salt group is preferably used.
Preferable examples of the cationic polymer compound include homopolymers of a monomer (cationic monomer) having a primary to tertiary amino group, a salt thereof, or a quaternary ammonium salt group, and copolymers or condensation polymers obtained by copolymerization or condensation polymerization using the cationic monomer and other monomer (hereinafter, referred to as a "non-cationic monomer"). These polymers may be used in the form of a water-soluble polymer or in the form of water-dispersible latex particles.

Specifically, the cationic polymer compound is preferably selected from the group consisting of poly(vinylpyridine) salts, polyalkylaminoethyl acrylate, polyalkylaminoethyl methacrylate, poly(vinylimidazole), polyethyleneimine, polybiguanide, polyguanide, copolymers including an epihalohydrin derivative and an amino derivative, and combinations thereof. The cationic polymer compound is more preferably a cationic polymer compound having a structural unit represented by the above Structural Formula (4) or Structural Formula (5).

Examples of the cationic polymer compound having a structural unit represented by the above Structural Formula (4) may include FLOQUAT FL-14 (trade name, manufactured by SNF Floerger) and LUPOSOL (trade name, manufactured by BASF). Further, examples of the cationic polymer compound having a structural unit represented by the above Structural Formula (5) may include VANTOCIL (trade name, manufactured by Avecia).

The cationic polymer compound having a structural unit represented by the above Structural Formula (4) may be configured as a copolymer including an epihalohydrin derivative and an amino derivative.
The copolymer including an epihalohydrin derivative and an amino derivative is a cationic copolymer of epihalohydrins and amines. It is preferable that at least one of the gamines is a secondary amine. It is more preferable that the cationic copolymer of epihalohydrins and amines is a linear copolymer, and it is even more preferable that the secondary amine is dimethylamine.
It is also preferable that the amines in the cationic copolymer of epihalohydrins and amines are a combination of primary amines and secondary amines. In this embodiment, it is more preferable that the primary amines are monomethyl amine, and it is even more preferable that the cationic copolymer of epihalohydrins and amines is a branched copolymer.

In a case in which the amine component in the cationic copolymer of epihalohydrins and amines includes both secondary amines and primary amines, the molar ratio of the secondary amines to the primary amines can be set between about 100 : 1 and about 10 : 1. Thereby, branching can be introduced in the cationic copolymer at a desired proportion.

In a case in which the treatment liquid is configured to include the cationic copolymer of epihalohydrins and amines, the treatment liquid preferably includes, for example, from 50% by mass to 95% by mass of water, from 5% by mass to 35% by mass of a water-soluble organic solvent (preferably, a water-soluble organic solvent having a vapor pressure lower than that of water), from 0% by mass to 5% by mass (preferably, from 0.05% by mass to 2% by mass) of a water-miscible surfactant, and from 0.5% by mass to 5% by mass of the cationic copolymer of epihalohydrins and amines.
The amine component in the cationic copolymer of epihalohydrins and amines may be secondary amines, or a combination of primary amines and secondary amines, as described above. The molecular weight of the cationic copolymer of epihalohydrins and amines is preferably a molecular weight such that the viscosity of a 50% by mass aqueous solution thereof (50% by mass of water and 50% by mass of the cationic copolymer) is within a viscosity range of from 10 cP to 100 cP at room temperature. This viscosity regulation is used, since it is difficult to determine actual molecular weight of the cationic copolymer.

It is preferable that the reaction liquid containing the cationic copolymer of epihalohydrins and amines further contains an additional cationic component other than the cationic copolymer. Examples of the additional cationic component may include polyvalent metal salts, other cationic polymers, and other cationic copolymers. Specific examples thereof may include polyvalent metal salts of nitric acid, salts of EDTA (ethylenediaminetetraacetic acid), salts of phosphonium halide, salts of an organic acid, and combinations thereof.

In a case in which the treatment liquid is configured to include the cationic polymer compound including a structural unit represented by the above Structural Formula (5), the treatment liquid preferably includes, for example, from 50% by mass to 95% by mass of water, from 5% by mass to 35% by mass of a water-soluble organic solvent (preferably, a water-soluble organic solvent having a vapor pressure lower than that of water), from 0% by mass to 5% by mass (preferably, from 0.05% by mass to 2% by mass) of a water-miscible surfactant, and from 0.5% by mass to 5% by mass of the cationic polymer compound including a structural unit represented by Structural Formula (5).

As the aggregating agent (coagulant) in the treatment liquid, an acidic compound may be exemplified. Preferable examples of the acidic compound include sulfuric acid, hydrochloric acid, nitric acid, phosphoric acid, polyacrylic acid, acetic acid, glycoric acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrole carboxylic acid, furan carboxylic acid, pyridine carboxylic acid, coumalic acid, thiophene carboxylic acid, nicotinic acid, or derivatives of such compound or salts thereof. One of these acidic materials may be used alone or two or more thereof may be used together.

In the present invention, when the treatment liquid includes an acidic compound, the pH value of the treatment liquid at 25°C is preferably 6 or less, and more preferably 4 or less. In particular, the pH value of the treatment liquid at 25°C is preferably from 1 to 4, and particularly preferably from 1 to 3. In such a case, the pH value of the ink composition at 25°C is preferably 7.5 or more, and more preferably 8.0 or more.
In particular, it is preferable that the pH value of the ink composition at 25°C is 8.0 or more and the pH value of the treatment liquid at 25°C is from 0.5 to 4, from the viewpoint of image density, resolution, and higher-speed inkjet recording.

In the present invention, when the coagulant is an acidic compound, an acidic compound having high solubility with respect to water is preferable. Further the coagulant is preferably an organic acid, more preferably a divalent or higher-valent organic acid, and still more preferably a divalent or trivalent acidic substance from the viewpoints of increasing coagulation properties and immobilizing the entire ink. The divalent or higher-valent organic acid is preferably an organic acid having a first pKa of 3.5 or less, and more preferably an organic acid having a first pKa of 3.0 or less. Examples thereof include phosphoric acid, oxalic acid, malonic acid, and citric acid.

Examples of the polyvalent metal salt include salts of alkaline earth metals belonging to group 2 of the periodic table (for example, magnesium and calcium), salts of a transition metal belonging to group 3 of the periodic table (for example, lanthanum), salts of a cation of a metal belonging to group 13 of the periodic table (for example, aluminum), salts of a lanthanide (for example, neodium). As the metal salts, carboxylic acid salts (such as, salts of formic acid, salts of acetic acid, and salts of benzoic acid), nitric acid salts, chlorides, and thiocyanic acid salts are preferred, and calcium salts or magnesium salt of a carboxylic acid (such as salts of formic acid, salts of acetic acid, and salts of benzoic acid), calcium salt of nitric acid or magnesium salt of nitric acid, calcium chloride, magnesium chloride, and calcium salt of thiocyanic acid or magnesium salt of thiocyanic acid are more preferred.

The coagulant may be used singly, or in combination of two or more thereof.
When the coagulant which coagulates the ink composition, is an acidic compound or a polyvalent metal salt thereof, the content of the coagulant in the treatment liquid is preferably from 1 to 50% by mass, more preferably from 3 to 45 % by mass, and still more preferably from 5 to 40 % by mass.

The treatment liquid may include other additives as additional components, as long as the effects of the present invention are not impaired. Examples of other additives include known additives, such as an anti-drying agent (moistening agent), an anti-fading agent, an emulsion stabilizer, a penetration enhancing agent, a UV absorber, an antiseptic agent, an mildew-proofing agent, a pH adjuster, a surface-tension controller, an antifoam agent, a viscosity adjuster, a dispersant, a dispersion stabilizer, an antirust agent, and a chelating agent.

### <Inkjet image forming method>

The inkjet image forming method of the present invention is configured to include an ink applying process of forming an image by applying the above-described inkjet ink composition onto a recording medium in accordance with an inkjet method. The inkjet image forming method of the present invention may further include a treatment liquid applying process of applying the above treatment liquid onto the recording medium, a drying process, and the like, as necessary.

### Ink Applying Process

The ink composition is applied onto the recording medium using an inkjet method in the ink applying process. Image recording utilizing the inkjet method can be performed, specifically, by supplying energy thereby ejecting an ink composition to a desired recording medium, that is, plain paper, high-quality paper, coated paper, art paper, resin-coated paper, paper used exclusively for inkjet recording described, for example, in JP-A Nos. 8-169172, 8-27693, 2-276670, 7-276789, 9-323475, 62-238783, 10-153989, 10-217473, 10-235995, 10-217597, and 10-337947, films, common use paper for electrophotography, clothes, glass, metals, ceramics, etc. As the inkjet recording method suitable to exemplary embodiments of the invention, a method described in JP-A No. 2003-306623, in columns [0093] to [0105] may be applicable.

The inkjet method is not particularly limited and may be of any known system, for example, a charge control system of ejecting an ink utilizing an electrostatic attraction force, a drop on demand system of utilizing a vibration pressure of a piezo element (pressure pulse system), an acoustic inkjet system of converting electric signals into acoustic beams, irradiating them to an ink, and ejecting the ink utilizing a radiation pressure, and a thermal inkjet system of heating an ink to form bubbles and utilizing the resultant pressure (BUBBLEJET (registered trade mark)). Examples of the inkjet method include a system of injecting a number of ink droplets of low concentration, a so-called "photo-ink" each in a small volume, a system of improving an image quality using plural inks of a substantially identical hue and of different concentrations, and a system of using a colorless transparent ink.

The inkjet head used in the inkjet method may be either an on-demand system or a continuous system. Ink nozzles, etc. used for recording by the inkjet method are not particularly limited but can be selected properly depending on the purpose.

Examples of the inkjet method include an inkjet head of a shuttle system in which a short serial head is used and recording is performed while allowing the head to scan in the lateral direction of a recording medium, and an inkjet head of a line system in which a line head in which recording elements are arranged corresponding to the entire region for one side of a recording medium is used. In the line system, an image can be recorded over the entire surface of the recording medium by allowing the recording medium to be scanned in the direction being perpendicular to the direction of scanning the recording elements, in which a transportation system such as a carriage by which the short head moves for scanning is not necessary. Further, since complicated scanning control for the movement of the carriage and the recording medium is not necessary and only the recording medium is moved, higher recording speed can be attained as compared with the shuttle system. While the image forming method in exemplary embodiments of the invention is applicable to any one of them, the effect of improving the ejection accuracy and the abrasion resistance of the image is generally remarkable when the inkjet recording method is applied to the line system without performing dummy jetting.

The amount of the liquid droplet of the ink ejected from the inkjet head is preferably from 1 pL (picoliter) to 10 pL, and more preferably from 1.5 pL to 6 pL, from the viewpoint of obtaining high-definition images. Further, it is effective to eject ink droplets with different liquid droplet amounts in combination from the viewpoints of improvement in image unevenness and improvement in successive gradation continuity, and even in such a case, the present invention can be preferably employed.

### - Inkjet Head having Silicone Nozzle Plate -

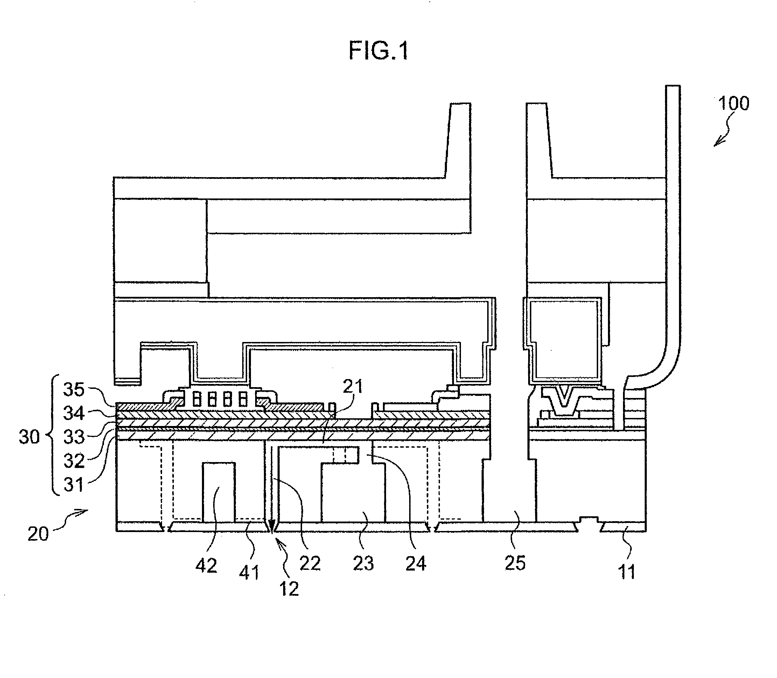

The inkjet head employed in the image forming method has a nozzle plate. At least a part of the nozzle plate contains silicone. Fig. 1 is a schematic diagram showing one example of an internal structure of the inkjet head.

Fig. 1 shows aninkjet head 100 having a nozzle plate 11 and an ink supplying unit 20 which is provided on a opposite side from the ink ejecting direction of the nozzle plate. The nozzle plate 11 has plural ejection openings 12 through which inks are ejected.

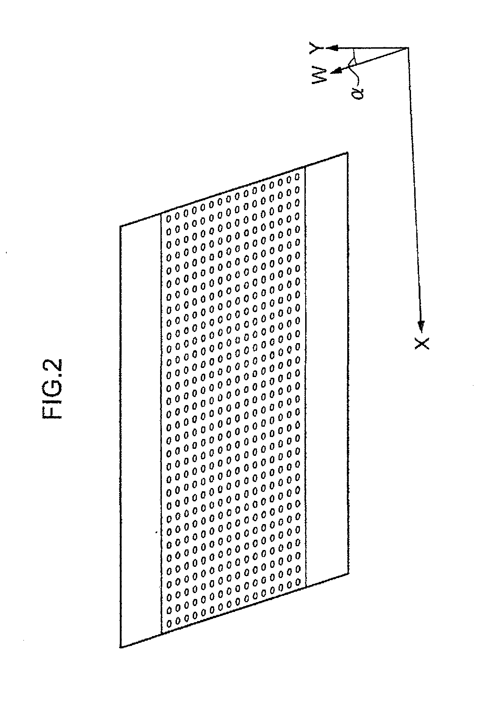

Fig. 2 shows a two-dimensional alignment of 32×60 ejection openings (nozzles) provided with the nozzle plate 11. At least a part of the nozzle plate is formed from silicone. The silicone is exposed at an inner wall of an opening of each nozzle and a surface of the nozzle plate 11 on the ink ejection direction side. A liquid-repellant film, which is not shown in the Figures, is provided at least a part of the surface of the nozzle plate 11 which resides at an ink ejection direction side.

The ink supply unit 20 is equipped with plural pressure chambers 21, each of which communicates with each of the plural ejection openings 12 of the nozzle plate 11 through the nozzle communication path 22, plural ink supplying paths 23 that supply ink to each of the plural pressure chambers 21, a common liquid chamber 25 that supplies ink to the plural ink supplying paths 23, and a pressure generation unit 30 that transforms each of the plural pressure chambers 21.

The ink supplying paths 23 locate between the nozzle plate 11 and the pressure generating unit 30 and an ink which has been supplied to the common liquid chamber 25 is introduced to the ink supplying path 23. One terminal of a supply regulating path 24 which is connected with the pressure chambers 21 is connected to the ink supplying path 23 so that an amount of an ink supplied from the ink supplying path 23 to the pressure chamber 21 may be regulated to be a desired one. Plural supply regulating paths 24 are provided at the ink supplying path 23. Ink is supplied to the pressure chambers 21 that are provided adjacent to the pressure generation unit 30, through the ink supplying path 23. This system may enable to supply a plenty of amount of ink to the plural ejection openings.

The pressure generating unit 30 has a configuration in which a vibration plate 31, an adhesion layer 32, a lower electrode 33, a piezoelectric layer 34, and an upper electrode 35 are provided in this order from the side at which the pressure chamber 21 resides. An electric wiring which supplies driving signal from outside is connected to the pressure generating unit 30. Transformation of the piezoelectric device which is caused in accordance with the driving signal leads ejection of an ink from the ejection opening 12 of the nozzle through the nozzle communication path 22.

A circulation aperture 41 which continuously collects an ink to a circulation path 42 is provided in the vicinity of the ejection opening 12. Increase of viscosity of an ink in the vicinity of the ejection opening during non-driving period may be suppressed thereby.

### (Treatment liquid applying process)

In the treatment liquid applying process, the treatment liquid containing the aggregating agent that aggregates components contained in the ink composition is applied onto the recording medium, whereby the treatment liquid is brought into contact with the ink composition to form an image. In this case, dispersed particles of pigment or the like in the ink composition aggregate, whereby an image is fixed on the recording medium. The treatment liquid includes at least an aggregating agent. Details on each component and preferable embodiments are as described above.

Application of the treatment liquid may be performed by applying known methods such as a coating method, an inkjet method, and an immersion method. The coating method may be performed by a known coating method using a bar coater, an extrusion die coater, an air doctor coater, a blade coater, a rod coater, a knife coater, a squeeze coater, or a reverse roll coater. Details of the inkjet method are as described above.

The treatment liquid applying step may be provided before or after the ink applying step using the ink composition.
In the invention, an embodiment in which the ink applying step is provided after the treatment liquid is applied in a treatment liquid applying step, is preferable. Specifically, an embodiment in which, before applying the ink composition onto the recording medium, a treatment liquid for aggregating pigments and/or self-dispersing polymer particles in the ink composition is applied in advance, and the ink composition is applied so as to contact the treatment liquid applied on the recording medium to form an image, is preferable. Thereby, inkjet recording may be speeded-up and, even when high speed recording is performed, an image having high density, and high resolution is obtained.

The amount of the treatment liquid to be applied is not particularly limited, so long as the treatment liquid is capable of coagulating the ink composition. The amount of the treatment liquid to be applied is preferably such an amount as to adjust the amount of the aggregating agent applied to 0.1 g/m² or more. The amount of the treatment liquid is more preferably such that the amount of the aggregating agent applied is adjusted to be from 0.2 g/m² to 0.7 g/m². When the amount of the aggregating agent applied is 0.1 g/m² or more, satisfactory high-speed coagulation properties may be maintained according to the various forms of usage of the ink composition. When the amount of the aggregating agent applied is 0.7 g/m² or less, the treatment liquid may not exert adverse influence (such as change in gloss or the like) on the surface property of the recording medium onto which the treatment liquid is applied, which is preferable.

According to exemplary embodiments of the invention, it is preferable to provide an ink applying step after the treatment liquid applying step, and to further provide a heating drying step of heating and drying the treatment liquid on the recording medium, between the time after applying the treatment liquid onto the recording medium, and the time until the ink composition is applied. By heating and drying the treatment liquid previously before the ink applying step, ink coloring properties such as the prevention of spreading becomes good, and visible images having good color density and hue can be recorded.

The heating and drying can be carried out by a known heating means such as heater, an air blowing means utilizing air blowing such as dryer, or a means combining these. Examples of the heating method include a method of supplying heat by a heater or the like, from the surface of the recording medium opposite the surface applied with the treatment liquid, a method of blowing a warm air or hot air to the surface of the recording medium applied with the treatment liquid, a method of heating using an infrared heater, or the like. Heating can also be performed by combining these methods.

### - Heating Fixing Step -

It is preferable that the image forming method in exemplary embodiments of the invention includes, after the ink applying step, a heating fixing step for heating and fixing the ink image formed by the application of the ink composition by placing the image in contact with a heated surface. By adding a heating fixing treatment, fixing of the image on the recording medium is achieved, and the resistance of the images to scratches can be further enhanced.

The heating method is not particularly limited, but methods of non-contact drying such as a method of heating with a heat generator such as a nichrome wire heater; a method of supplying warm air or hot air; and a method of heating with a halogen lamp, an infrared lamp or the like, may be suitably exemplified. The method of drying by heating and pressing is not particularly limited, but methods of performing heating and fixing by contact such as, for example, a method of pressing a heat plate to the image-formed surface of the recording medium, and a method of passing the image through a pair of rollers using a heating and pressing apparatus equipped with a pair of heating and pressing rollers, a pair of heating and pressing belts, or a heating and pressing belt disposed on the side of the image-recorded surface of the recording medium and a retaining roller disposed on the opposite side, may be suitably mentioned.

A conveying rate of a recording medium in a case of using heating and pressing rollers or heating and pressing belts, is preferably in a range of from 200mm per second to 700mm per second, more preferably in a range of from 300mm per second to 650mm per second, and even more preferably in a range of from 400mm per second to 600mm per second.

### - Recording medium -

The image forming method in exemplary embodiments of the invention is to record an image on the recording medium.
The recording medium is not particularly limited, and general printing paper containing cellulose as a main component such as so-called high-quality paper, coated paper, and art paper may be used. The general printing paper containing cellulose as a main component absorbs and dries an ink relatively slowly, easily causes coloring material movement after a droplet is spotted, and allows image quality to easily deteriorate in image recording by a general inkjet method using an aqueous ink. However, according to the image forming method in exemplary embodiments of the invention, coloring material movement is suppressed, and a high-quality image excellent in color density and hue may be recorded.

As the recording medium, a recording medium which is generally commercially available may be used, and examples include high quality paper such as OK PRINCE HIGH QUALITY (trade name, manufactured by Oji Paper Co., Ltd. ), SHIORAI (trade name, manufactured by Nippon Paper Industries Co., Ltd. ), and NEW NP HIGH QUALITY (trade name, manufactured by Nippon Paper Industries Co., Ltd. ), fine coated paper such as OK EVER LITE COAT (trade name, manufactured by Oji Paper Co., Ltd. ) and AURORA S (trade name, Nippon Paper Industries Co., Ltd. ), light coated paper (A3) such as OK COAT L (trade name, manufactured by Oji Paper Co., Ltd. ) and AURORA L (trade name, manufactured by Nippon Paper Industries Co., Ltd. ), coated paper (A2, B2) such as OK TOP COAT +(trade name, manufactured by Oji Paper Co., Ltd. ) and AURORA COAT (trade name, manufactured by Nippon Paper Industries Co., Ltd. ), and an art paper (A1) such as OK KANEFUJI +(trade name, manufactured by Oji Paper Co., Ltd. ) and TOKUBISHI ART (trade name, manufactured by Nippon Paper Industries Co., Ltd. ). Further, various papers for photography for use in inkjet recording may be used.

Among the recording media, a so-called coated paper used in general offset printing is preferred. The coated paper is a product obtained by coating with a coating material including inorganic pigments the surface of a base paper such as a high quality paper or neutral paper which is mainly based on cellulose and is not surface treated. The coated paper is likely to cause problems in product quality such as the gloss or abrasion resistance of images, in the conventional image formation by aqueous inkjet recording, but in the image forming method in exemplary embodiments of the invention, gloss irregularity is suppressed, and images having good glossiness and abrasion resistance are obtained. Particularly, it is preferable to use a coated paper having a base paper and a coating layer containing inorganic pigments, and is more preferable to use a coated paper having a base paper and a coating layer containing kaolin and/or calcium bicarbonate. Specifically, art paper, coated paper, lightweight coated paper or finely coated paper is more preferred. This application claims priority from Japanese Patent Application No. 2010-073007, filed on March 26, 2010, the disclosure of which is incorporated by reference herein.

### EXAMPLES

Hereinafter, the present invention will be specifically described with reference to Examples, but the present invention is not limited to these Examples. Unless stated otherwise, the "parts" and "%" are based on mass.

### [Preparation of Ink Composition]

### <<Preparation of Ink Composition 1>>

### - Preparation of Polymer Dispersant 1 Solution -

Polymer dispersant 1 represented by the following chemical formula was prepared in the form of a 50% methyl ethyl ketone solution by a conventional method.

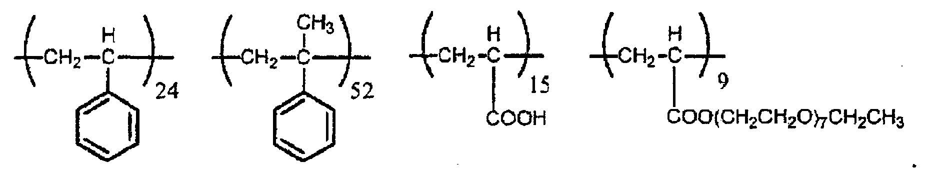

A portion of the obtained polymer dispersant 1 solution was separated through removing the solvent, and the obtained solid matter was diluted to 0.1% by mass using tetrahydrofuran. The weight average molecular weight was measured using a high-speed GPC (gel permeation chromatography) HLC-8220GPC (trade name) with three serially-connected columns of TSKGEL SUPER HZM-H, TSKGEL SUPER HZ4000, and TSKGEL SUPER HZ2000 (trade names, all manufactured by Tosoh Corporation). From the measurement, it was revealed that the weight average molecular weight was 5,200.

### (Preparation of pigment dispersion 1)

10 parts of pigment blue 15:3 (Phthalocyanine blue-A220, trade name, manufactured by Dainichiseika Color & Chemicals Mfg. Co., Ltd.; cyan pigment), 4 part of the polymer dispersing agent P-1, 42 parts of methyl ethyl ketone, 4.4 parts of 1 mol/L NaOH aqueous solution, and 87.2 parts of ion-exchanged water were mixed and then dispersed for 2 to 6 hours by a beads mill using 0.1 mmφ zirconia beads.
After removing the methyl ethyl ketone under reduced pressure and, furthermore, removing some water, a centrifugal treatment was performed on the obtained dispersion by using a high-speed centrifugal cooling machine 7550 (trade name, manufactured by Kubota Corporation) to recover supernatant solutions other than precipitates. Thereafter, pigment concentration was obtained from the absorbance spectrum, and the pigment dispersion 1 as a dispersion of resin-coated pigment particles with the pigment concentration of 10% by mass was obtained.

After the pigment dispersion liquid was prepared as described above, sodium silicate which was used as a silicon compound, a water-soluble organic solvent, a surfactant, and ion exchanged water were added thereto, to give the following composition. After mixing the components, coarse particles were removed by filtering through a 5 µm-filter, to obtain ink composition 1.

### <Composition of Ink Composition 1>

- PHTHALOCYANINE BLUE A220 (trade name, manufactured by Dainichiseika Color & Chemicals Mfg. Co., Ltd.; cyan pigment) 3%
- Polymer dispersant 1 1.2%
- Sodium silicate 0.01%
- Dipropylene glycol 20%
- Tetraethylene glycol 10%
- Phosphoric acid ester surfactant (trade name: PHOSPHANOL ML-220, manufactured by TOHO Chemical Industry Co.. Ltd.) 0.5%
- Nonionic surfactant (trade name: OLFINE E1010, manufactured by Nissin Chemical Industry Co., Ltd.) 0.5%
- Ion exchanged water remainder, up to the total amount of 100%

### <<Preparation of Ink Compositions 2 to 9>>

Preparation of ink composition 2 to 9 was conducted in a manner substantially similar to that in the preparation of the ink composition 1 above, except that the kind and content of the silicon compound, the kind and content of the water-soluble organic solvent, and the content of urea in the preparation of the ink composition 1 were changed as shown in Table 1.

### <<Preparation of Ink Composition C1>>

Preparation of ink composition C1 was conducted in a manner substantially similar to that in the preparation of the ink composition 1 above, except that the silicon compound in the preparation of the ink composition 1 was not added.

### <<Preparation of Ink Composition C2>>

### - Preparation of Pigment Dispersion Liquid C1 -

10 parts of Pigment Blue 15:3 (trade name: PHTHALOCYANINE BLUE A220, manufactured by Dainichiseika Color & Chemicals Mfg. Co., Ltd.; cyan pigment), 1.5 parts of sodium oleate, and 88.5 parts of ion exchanged water were mixed, and then dispersed for 2 hours to 6 hours using a bead mill with zirconia beads having a diameter of 0.1 mm.
Thereafter, the pigment concentration was determined from an absorbance spectrum. In this way, pigment dispersion liquid C1 was obtained as a pigment dispersion having a pigment concentration of 10% by mass.

Preparation of ink composition C2 was conducted in a manner substantially similar to that in the preparation of the ink composition 1 above, except that the obtained pigment dispersion liquid C1 was used.

### [Preparation of Treatment Liquid]

### (Preparation of Treatment Liquid 1 and Treatment Liquid 2)

Treatment liquids 1 and 2 were prepared by mixing the components of the following composition. Note that, EHPD is an abbreviation for
2-ethyl-2-(hydroxymethyl)propanediol.

### <Composition of Treatment Liquid 1>

- Cationic polymer (trade name: FLOQUAT FL-14, manufactured by SNF Floerger) 2%
- 4-Methylmorpholine N-oxide 18%
- Water-soluble organic solvent (EHPD) 8%
- Nonionic fluorocarbon surfactant (trade name: MEGAFACE 443, manufactured by DIC Corporation) 0.1%
- Nonionic surfactant (trade name: OLFINE E1010, manufactured by Nissin Chemical Industry Co., Ltd.) 0.9%
- Ion exchanged water remainder, up to the total amount of 100%

### <Composition of Treatment Liquid 2>

- Cationic polymer (polyguanide; trade name: VANTOCIL, manufactured by Avecia) 2%
- 4-Methylmorpholine N-oxide 18%
- Water-soluble organic solvent (EHPD) 8%
- Nonionic fluorocarbon surfactant (trade name: MEGAFACE 443, manufactured by DIC Corporation) 0.1%
- Nonionic surfactant (trade name: OLFINE E1010, manufactured by Nissin Chemical Industry Co., Ltd.) 0.9%
- Ion exchanged water remainder, up to the total amount of 100%

### <Evaluation>

With respect to the inkjet ink compositions obtained as described above, the following evaluation was performed. Results are shown in Table 1.

### (Evaluation of Ink Stability)

The temperature of each of the inkjet ink compositions (Ink compositions 1 to 9, C1 and C2) prepared as described above was adjusted to 25°C. Using an oscillation type viscometer (trade name: DV-II+ VISCOMETER, manufactured by BROOKFIELD), under an environment of 25°C at 50% relative humidity, the viscosity of each of the undiluted ink compositions was measured at 25°C using a cone plate (having a diameter of 35 mm). The average value of data obtained under the conditions in which the torque was in the range of from 20% to 90%, and the rotation frequency was in the range from 0.5 rpm to 100 rpm was determined as the measured value. The measured value immediately after the preparation was let be ink viscosity 1.
Then, a portion of the inkjet ink compositions (Ink compositions 1 to 9, C1 and C2) was placed in a sample bottle made of glass and was left stand for two weeks under an environment of 60°C in the closed state. The viscosity after the storage was measured in a manner substantially similar to the above, and the measured value after the storage was let be ink viscosity 2. Further, simultaneously, the state of the ink liquid was visually observed.
The variation rate {100 - (ink viscosity 2/ink viscosity 1) × 100} of the viscosities before and after the storage, which were measured as described above, was calculated. From the obtained variation rate of ink viscosity and the results of visual observation after the storage, ink stability was evaluated according to the following evaluation criteria.

### - Evaluation Criteria -

AA: The variation rate of ink viscosity is less than ±15%, and changes are not recognized with regard to the ink liquid.
A: The variation rate of ink viscosity is ±15% or more but less than ±30%, and changes are not recognized with regard to the ink liquid.
B: The variation rate of ink viscosity is ±30% or more but less than ±50%, and changes are not recognized with regard to the ink liquid.
C: The variation rate of ink viscosity is ±50% or more, or separation or gelation of the ink liquid is observed.

### (Evaluation of Liquid-repellency)

### - Immersing test for Liquid-repellent film -

A test piece was prepared by applying a fluorinated aklylsilane compound onto a silicone plate having a size of 2cm×2cm to form a liquid-repellent film (self assembled monolayer (SAM)). The contact angle of water with respect to the liquid-repellent film was measured in accordance with the following procedure, and the effect of the ink composition to the liquid-repellency of the liquid-repellant film was evaluated.
30 mL of the respective ink composition was placed in a 50mL-jar made of polypropylene (trade name: AIBOY HIROKUCHI BIN 50ML, manufactured by Asone Corporation). The test piece was then immersed in the ink composition and maintained at 60°C for 72 hours. The test piece was then taken out from the jar, washed with ultrapure water, and subjected measurement of the contact angle of water with respect to the liquid-repellant film.
The measurement of the contact angle was performed by using ultrapure water and a contact angle measurement apparatus (trade name: DM-500, manufactured by Kyowa Interface Science Co., Ltd.) under the environment condition of 25°C at 50% relative humidity, and evaluation was performed according to the following evaluation criteria.
The contact angle of water with respect to the liquid-repellant film observed before performing the immersion test was 106.5°. The grade D in the evaluation is deemed as practically problematic.

### - Evaluation Criteria -:

AA: The contact angle is 80° or more.
A: The contact angle is 60° or more but less than 80°.
B: The contact angle is 40° or more but less than 60°.
C: The contact angle is 20° or more but less than 40°.
D: The contact angle is less than 20°.

### Evaluation of Discharge reliability

An inkjet head having a silicone nozzle plate as shown in Fig. 1 was fixed in a manner that the moving direction of a stage became perpendicular to the nozzle alignment direction. Herein, a liquid-repellent film was previously provided on the surface of the silicone nozzle plate by using a fluorinated alkylsilane compound. A reservoir tank connected to the inkjet head was refilled with the ink composition obtained as above. A recording medium (trade name: GASAI SHASHIN SHIAGE PRO, manufactured by Fujifilm Corporation) was fixed onto the stage that was movable in the direction perpendicular to the nozzle alignment direction.
The stage was then moved at a speed of 248 mm/minute under ejection conditions of an ink droplet amount of 3.4 pL, an ejection frequency of 10 kHz, a resolution of 75 dpi × 1200 dpi (nozzle alignment direction × moving direction), and a number of ink droplets ejected from each nozzle of 2000, so that a sample having an image of 96 lines which were parallel to the moving direction was formed. The thus-obtained printed sample was visually observed to confirm that every nozzle ejected the ink.
The inkjet head was left stand as it was after the ink ejection for a certain period. Then, an unprinted recording medium is fixed onto the stage, and another printed sample was formed by discharging the ink composition under the same ejection conditions. The thus-obtained another printed sample was visually observed. The discharge reliability of the ink composition was evaluated in terms of the length of the maximum left-standing period which allowed ejection of the 2000 droplets of the ink for all of the 96 nozzles. The longer maximum left-standing period, during which discharge failure does not occur, means the better discharge reliability of the ink composition. The evaluation criteria for the discharge reliability were set as following.
The grade D in the evaluation is deemed as practically problematic.

### - Evaluation Criteria -:

A: The maximum left-standing period during which discharge failure does not occur is 45 minutes or more.
B: The maximum left-standing period during which discharge failure does not occur is 30 minutes or more but less than 45 minutes.
C: The maximum left-standing period during which discharge failure does not occur is 20 minutes or more but less than 30 minutes.
D: The maximum left-standing period during which discharge failure does not occur is less than 20 minutes.

### <Image Forming>

An inkjet head having a silicone nozzle plate as shown in Fig. 1 was prepared. A reservoir tank connected to the inkjet head was refilled with the ink composition obtained as above. Herein, a liquid-repellent film was previously provided on the silicone nozzle plate by using a fluorinated alkylsilane compound. A recording medium TOKUBISHI ART PAPER DOUBLE-SIDED N (trade name, manufactured by Mitsubishi Paper Mills Limited) was fixed on a stage that was movable in a predetermined linear direction at a speed of 500 mm/sec. The treatment liquid 1 or treatment liquid 2 was coated to form a coating film having a thickness of about 1.2 nm on the recording medium using a bar coater with maintaining the temperature at 30°C, and immediately after the coating, the resulted coating film was dried at 50°C for 2 seconds.

After that, the inkjet head was placed and fixed in a manner such that the direction (W direction in Fig. 2) of the line along which print nozzles were arrayed was inclined at an angle of 75.7° (90°-α in Fig. 2) with respect to the direction (principal scanning direction: X direction in Fig. 2) perpendicular to the moving direction (sub-scanning direction: Y direction in Fig. 2) of the stage. While the recording medium was moved at a constant speed in the sub-scanning direction, the ink was ejected according to the line system under ejection conditions of an ink droplet amount of 2.4 pL, an ejection frequency of 24 kHz, and a resolution of 1200 dpi × 1200 dpi, so that a 50%-solid image having two centimeters square was printed.
Immediately after printing, the printed recording medium was dried at 60°C for 3 seconds, and further passed between a pair of fixing rollers heated to 60°C so that fixing treatment was carried out at a nip pressure of 0.25 MPa and a nip width of 4 mm. In this way, a sample for evaluation was obtained.
With regard to the obtained samples for evaluation, image unevenness was visually evaluated, and the obtained results were evaluated according to the following evaluation criteria.

### - Evaluation Criteria -

A: Five people among five people have judged that there is no image unevenness.
B: Three or four people among five people have judged that there is no image unevenness.
C: Three or more people among five people have judged that there exists image unevenness.

TABLE 1

| | Ink comp'tn | Pig. disps'n | Silicon compound | | Water soluble organic solvent (content(%)) | Urea (content) (%) | Treat. Liq. | Ink Stab. | Disch. Reliab. | Liquid Repel. | Image Unev. |
|---|---|---|---|---|---|---|---|---|---|---|---|
| | | | Kind | Content (%) | | | | | | | |
| Exp. 1 | 1. comp'tn 1 | P. disps'n 1 | Sodium silicate | 0.01 | DPG (20%) | non | Treat. Liq.1 | AA | A | A | A |
| | | | | | TEG (10%) | | | | | | |
| Exp. 2 | I. comp'tn 2 | P. disps'n 1 | Sodium silicate | 0.1 | TPG (20%) | non | Treat. Liq.1 | AA | A | AA | A |
| | | | | | TEG (10%) | | | | | | |
| Exp.3 | **I.** comp'tn 3 | P. disps'n 1 | Sodium silicate | I | TPG (20%) | non | Treat. Liq.1 | AA | B | AA | A |
| | | | | | TriEG (10%) | | | | | | |
| Exp.4 | I. comp'tn 4 | P. disps'n 1 | SNOWTEX XS | 0.01 | TPG (20%) | non | Treat. Liq.1 | AA | A | A | A |
| | | | | | TriEG(10%) | | | | | | |
| Exp.5 | **I.** comp'tn 5 | P. disps'n 1 | SNOWTEX XS | 0.1 | TPG (20%) | non | Treat. Liq.1 | AA | B | AA | A |
| | | | | | TEG (10%) | | | | | | |
| Exp. 6 | I. comp'tn 6 | P. disps'n 1 | Sodium silicate | 0.01 | TPG (20%) | Urea (6%) | Treat. Liq.1. | A | A | A | A |
| | | | | | TriEG (10%) | | | | | | |
| Exp.7 | I. comp'tn 7 | P. disps'n 1 | SNOWTEX XS | 0.1 | TPG (20%) | Urea (6%) | Treat. Liq.1 | A | A | A | A |
| | | | | | TEG (10%) | | | | | | |
| Exp. 8 | I. comp'tn 8 | P. disps'n 1 | Sodium silicate | 0.01 | TPG (20%) | non | Treat. Liq.2 | AA | B | A | A |
| | | | | | TriEG (10%) | | | | | | |
| Exp. 9 | I. comp'tn 5 | P. disps'n 1 | SNOWTEX XS | 0.1 | TPG (20%). | non | Treat. Liq.2 | AA | B | AA | A |
| | | | | | TEG (10%) | | | | | | |
| Exp.10 | I. comp'tn 9 | P. disps'n 1 | SNOWTEX XS | 0.1 | DPG (20%) | Urea (6%) | Treat. Liq.2 | A | A | A | A |
| | | | | | TEG (10%) | | | | | | |
| Comp. Exp. 1 | I. comp'tn c1 | P. disps'n 1 | non | non | DPG (20%) | non | Treat. Liq.1 | AA | B | D | A |
| | | | | | TEG (10%) | | | | | | |
| Comp. Exp. 2 | I. comp'tn c1 | P. disps'n I | non | non | DPG (20%) | non | non | AA | B | D | C |
| | | | | | TEG (10%) | | | | | | |
| Comp. Exp. 3 | I. comp'tn c2 | P. disps'n c 1. | Sodium silicate | 0.01 | DPG (20%) | non | Treat. Liq.1 | C | B | A | A |
| | | | | | TEG (10%) | | | | | | |

In Table 1 the abbreviation "Exp." denotes "Example", the abbreviation "Comp. Exp." denotes "Comparative Example", the abbreviation "I. comp'tn" denotes "Ink composition", the abbreviation "P. disps'n" denotes "Pigment dispersion", the abbreviation "DPG" denotes "Dipropylene glycol", the abbreviation "TEG" denotes "Tetraethylene glycol", the abbreviation "TPG" denotes "Tripropylene glycol", the abbreviation "TriEG" denotes "Triethylene glycol", the abbreviation "Treat. Liq." denotes "Treatment liquid", the abbreviation "Ink Stab." denotes "Ink stability", the abbreviation "Dish. Reliab." denotes "Discharge reliability", the abbreviation "Liquid Repel." denotes "Liquid repellency", and the abbreviation "Image Unev." denotes "Image unevenness".

It is understood from Table 1 that the ink composition of the present invention exhibits excellent ink dispersion stability and excellent discharge reliability, and can suppress the lowering of liquid repellency of the inkjet head member.

## Claims

1. An inkjet ink composition comprising a pigment, a polymer compound, a water soluble organic solvent, a silicon compound and water, the polymer compound comprising a structural unit represented by the following Formula (1), a structural unit represented by the following Formula (2), and a structural unit represented by the following Formula (3); the water soluble organic solvent being a diol compound comprising a repetition structure formed from oxyalkylene groups having 2 or 3 carbon atoms; and the silicon compound being selected from the group consisting of colloidal silica and water-soluble alkali metal salts of silicic acid: 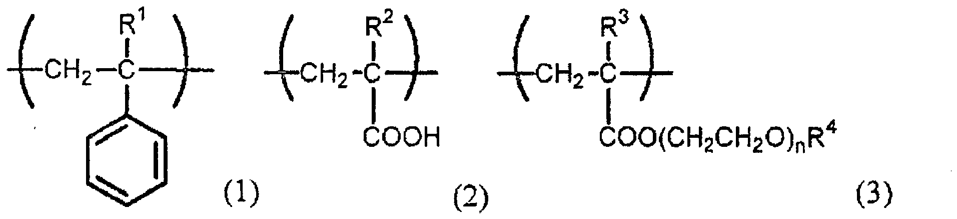 wherein, in Formulae (1) to (3), R¹, R², and R³ each independently represents a hydrogen atom or a methyl group; R⁴ represents an alkyl group having 1 to 10 carbon atoms; and n represents an integer of from 1 to 20.

2. The inkjet ink composition according to claim 1, wherein the silicon compound is selected from the group consisting of a sodium silicate, a potassium silicate, and colloidal silica having a volume average particle diameter of 100 nm or less.

3. The inkjet ink composition according to claim 1 or claim 2, further comprising a phosphoric acid ester surfactant.

4. The inkjet ink composition according to any one of claims 1 to 3, wherein a content of the silicon compound in the inkjet ink composition is in a range of from 0.01% by mass to 3% by mass.

5. The inkjet ink composition according to any one of claims 1 to 4, further comprising at least one selected from the group consisting of a urea and a urea derivative.

6. The inkjet ink composition according to any one of claims 1 to 5, further comprising resin particles.

7. The inkjet ink composition according to any one of claims 1 to 6, wherein a pH at 25°C of the inkjet ink composition is in a range of from 7.5 to 10.0.

8. The inkjet ink composition according to any one of claims 1 to 7, wherein a weight average molecular weight of the polymer compound is in a range of from 5,000 to 50,000.

9. The inkjet ink composition according to any one of claims 1 to 8, wherein an acid value of the polymer compound is in a range of from 25 mgKOH/g to 120 mgKOH/g.

10. The inkjet ink composition according to claim 3, wherein the phosphoric acid ester surfactant is a phosphoric acid ester represented by the following formula: 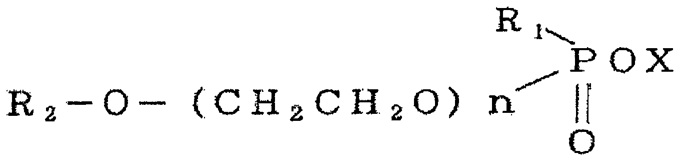 wherein, in the formula, R₁ represents -OX or R₂-O-(CH₂CH₂O)ₙ-; R₂ represents an alkyl group, alkenyl group, or alkylphenyl group having from 8 to 18 carbon atoms; n represents an integer of from 1 to 30; and X represents an alkali metal, an amine, or an alkanolamine.

11. An ink set comprising the inkjet ink composition according to any one of claims 1 to 10 and a treatment liquid, the treatment liquid comprising a cationic polymer compound comprising a structural unit represented by the following Formula (4) or the following Formula (5):

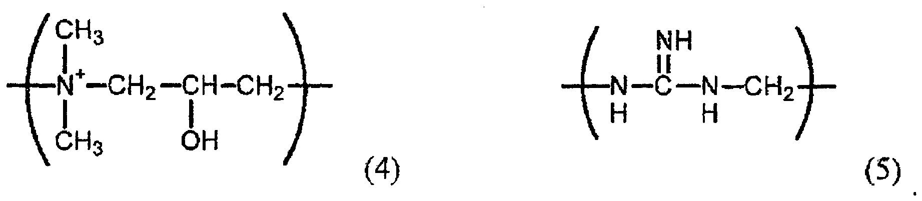

12. A method of forming an image comprising discharging the inkjet ink composition according to any one of claims 1 to 10 onto a recording medium by an inkjet process.

13. The method of forming an image according to claim 12, wherein the method further comprises discharging a treatment liquid onto the recording medium, the treatment liquid comprising a cationic polymer compound comprising a structural unit represented by the following Formula (4) or the following Formula (5):

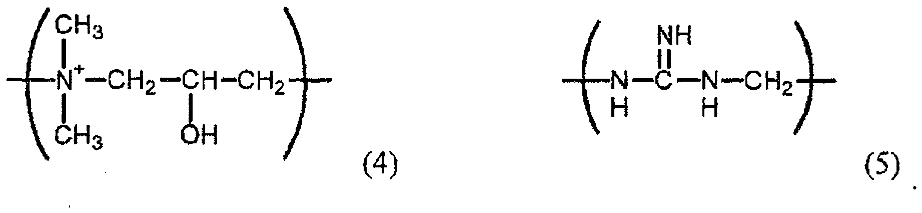

## Patentansprüche

1. Tintenstrahl-Tintenzusammensetzung, umfassend ein Pigment, eine Polymerverbindung, ein wasserlösliches organisches Lösungsmittel, eine Siliziumverbindung und Wasser, wobei die Polymerverbindung eine durch die folgende Formel (1) dargestellte Struktureinheit, eine durch die folgende Formel (2) dargestellte Struktureinheit und eine durch die folgende Formel (3) dargestellte Struktureinheit umfasst; worin das wasserlösliche organische Lösungsmittel eine Diolverbindung ist, die eine aus Oxyalkylengruppen mit 2 oder 3 Kohlenstoffen gebildete Wiederholungsstruktur umfasst; und die Siliziumverbindung ausgewählt ist aus der Gruppe bestehend aus kolloidalem Silika und wasserlöslichen Alkalimetallsalzen von Kieselsäure: 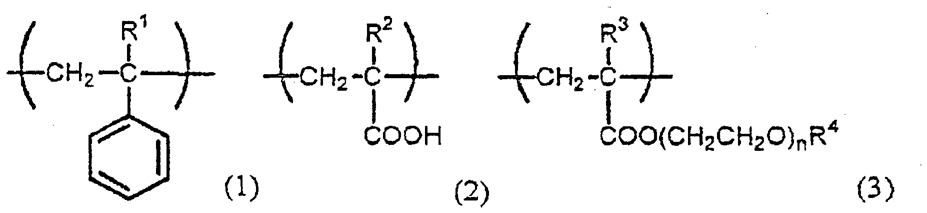 worin in den Formeln (1) bis (3) R¹, R² und R³ jeweils unabhängig ein Wasserstoffatom oder eine Methylgruppe darstellen; R⁴ eine Alkylgruppe mit 1 bis 10 Kohlenstoffatomen darstellt und n eine ganze Zahl von 1 bis 20 darstellt.

2. Tintenstrahl-Tintenzusammensetzung gemäß Anspruch 1, worin die Siliziumverbindung ausgewählt ist aus der Gruppe bestehend aus Natriumsilikat, Kaliumsilikat und kolloidalem Silika mit einem volumengemittelten Partikeldurchmesser von 100 nm oder kleiner.

3. Tintenstrahl-Tintenzusammensetzung gemäß Anspruch 1 oder Anspruch 2, ferner umfassend ein Phosphorsäureester-Tensid.

4. Tintenstrahl-Tintenzusammensetzung gemäß irgendeinem der Ansprüche 1 bis 3, worin der Mengenanteil der Siliziumverbindung in der Tintenstrahl-Tintenzusammensetzung im Bereich von 0,01 bis 3 Masse% liegt.

5. Tintenstrahl-Tintenzusammensetzung gemäß irgendeinem der Ansprüche 1 bis 4, ferner umfassend mindestens eines, ausgewählt aus der Gruppe bestehend aus Harnstoff und einem Harnstoffderivat.

6. Tintenstrahl-Tintenzusammensetzung gemäß irgendeinem der Ansprüche 1 bis 5, ferner umfassend Harzpartikel

7. Tintenstrahl-Tintenzusammensetzung gemäß irgendeinem der Ansprüche 1 bis 6, worin der pH-Wert der Tintenstrahl-Tintenzusammensetzung bei 25°C im Bereich von 7,5 bis 10,0 liegt.

8. Tintenstrahl-Tintenzusammensetzung gemäß irgendeinem der Ansprüche 1 bis 7, worin das gewichtsgemittelte Molekulargewicht der Polymerverbindung im Bereich von 5.000 bis 50.000 liegt.

9. Tintenstrahl-Tintenzusammensetzung gemäß irgendeinem der Ansprüche 1 bis 8, worin der Säurewert der Polymerverbindung im Bereich von 25 mgKOH/g bis 120 mgKOH/g liegt.

10. Tintenstrahl-Tintenzusammensetzung gemäß Anspruch 3, worin das Phosphorsäureester-Tensid ein Phosphorsäureester ist, der durch die folgende Formel dargestellt wird: 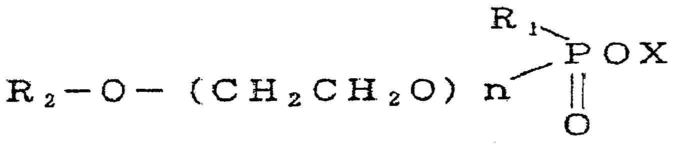 worin in der Formel R₁ -OX oder R₂-O-(CH₂CH₂O)ₙ-darstellt; R₂ eine Alkylgruppe, Alkenylgruppe oder Alkylphenylgruppe, die 8 bis 18 Kohlenstoffatome aufweist, darstellt; n eine ganze Zahl von 1 bis 30 darstellt; und X ein Alkalimetall, ein Amin oder ein Alkanolamin darstellt.

11. Tintenset, umfassend die Tintenstrahl-Tintenzusammensetzung gemäß irgendeinem der Ansprüche 1 bis 10 und eine Behandlungsflüssigkeit, worin die Behandlungsflüssigkeit eine kationische Polymerverbindung umfasst, die eine durch die folgende Formel (4) oder folgende Formel (5) dargestellte Struktureinheit umfasst:

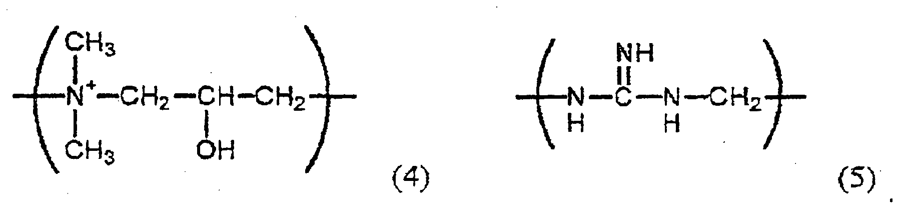

12. Verfahren zum Erzeugen eines Bildes, umfassend das Ausstoßen der Tintenstrahl-Tintenzusammensetzung gemäß irgendeinem der Ansprüche 1 bis 10 auf ein Aufzeichnungsmedium mittels eines Tintenstrahlprozesses.

13. Verfahren zum Erzeugen eines Bildes gemäß Anspruch 12, worin das Verfahren das Ausstoßen einer Behandlungsflüssigkeit auf das Aufzeichnungsmedium umfasst, wobei die Behandlungsflüssigkeit eine kationische Polymerverbindung umfasst, die eine durch die folgende Formel (4) oder die folgende Formel (5) dargestellte Struktureinheit umfasst:

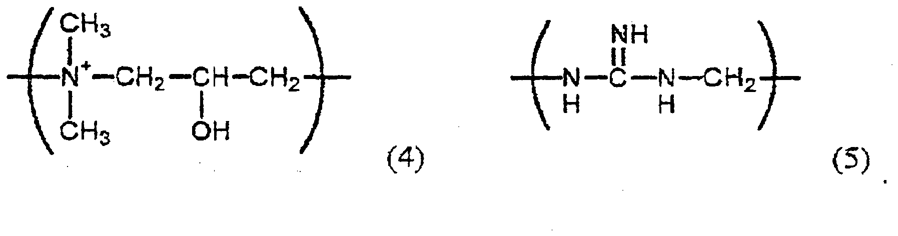

## Revendications

1. Composition d'encre pour jet d'encre comprenant un pigment, un composé polymère, un solvant organique hydrosoluble, un composé de silicium et de l'eau, le composé polymère comprenant un motif structural représenté par la formule suivante (1), un motif structural représenté par la formule suivante (2) et un motif structural représenté par la formule (3) ; le solvant organique hydrosoluble étant un composé diol comprenant une structure répétée formée à partir de groupes oxyalcylène ayant 2 ou 3 atomes de carbone ; et le composé de silicium étant choisi dans le groupe constitué par la silice colloïdale et les sels métalliques alcalins hydrosolubles de l'acide silicique : 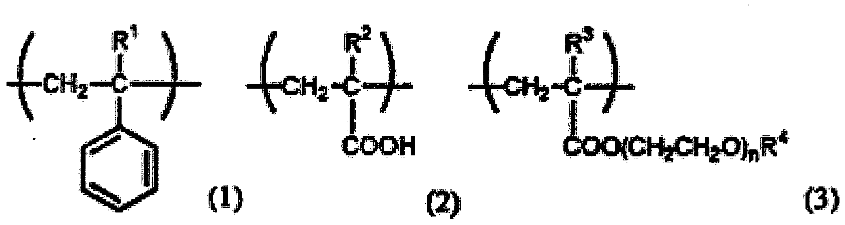 dans laquelle, dans les formules (1) à (3), R¹, R² et R³ représentent chacun indépendamment un atome d'hydrogène ou un groupe méthyle ; R⁴ représente un groupe alkyle ayant de 1 à 10 atomes de carbone ; et n représente un nombre entier de 1 à 20.

2. Composition d'encre pour jet d'encre selon la revendication 1, dans laquelle le composé de silicium est choisi dans le groupe constitué par un silicate de sodium, un silicate de potassium et une silice colloïdale ayant un diamètre de particule moyen en volume de 100 nm ou moins.

3. Composition d'encre pour jet d'encre selon la revendication 1 ou la revendication 2, comprenant en outre un tensioactif ester d'acide phosphorique.

4. Composition d'encre pour jet d'encre selon l'une quelconque des revendications 1 à 3, dans laquelle une teneur du composé de silicium dans la composition d'encre pour jet d'encre se situe dans une plage allant de 0,01 à 3 % en masse.

5. Composition d'encre pour jet d'encre selon l'une quelconque des revendications 1 à 4, comprenant en outre au moins un choisi dans le groupe constitué par une urée et un dérivé d'urée.

6. Composition d'encre pour jet d'encre selon l'une quelconque des revendications 1 à 5, comprenant en outre des particules de résine.

7. Composition d'encre pour jet d'encre selon l'une quelconque des revendications 1 à 6, dans laquelle un pH à 25°C de la composition d'encre pour jet d'encre se situe dans une plage allant de 7,5 à 10,0.

8. Composition d'encre pour jet d'encre selon l'une quelconque des revendications 1 à 7, dans laquelle une masse moléculaire moyenne du composé polymère se situe dans une plage allant de 5000 à 50000.

9. Composition d'encre pour jet d'encre selon l'une quelconque des revendications 1 à 8, dans laquelle une valeur acide du composé polymère se situe dans une plage allant de 25 à 120 mg KOH/g.

10. Composition d'encre pour jet d'encre selon la revendication 3, dans laquelle le tensioactif ester d'acide phosphorique est un ester d'acide phosphorique représenté par la formule suivante : 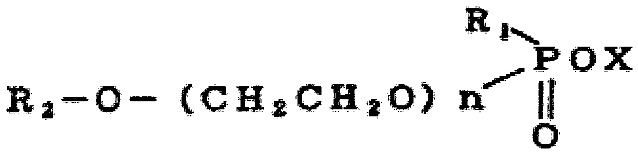 dans laquelle, dans la formule, R₁ représente -OX ou R₂-O-(CH₂CH₂O)ₙ- ; R₂ représente un groupe alkyle, un groupe alcényle, ou un groupe alkylphényle ayant de 8 à 18 atomes de carbone ; n représente un nombre entier de 1 à 30 ; et X représente un métal alcalin, une amine ou une alcanolamine.

11. Jeu d'encre comprenant la composition d'encre pour jet d'encre selon l'une quelconque des revendications 1 à 10 et un liquide de traitement, le liquide de traitement comprenant un composé polymère cationique comprenant un motif structural représenté par la formule suivante (4) ou la formule suivante (5) :

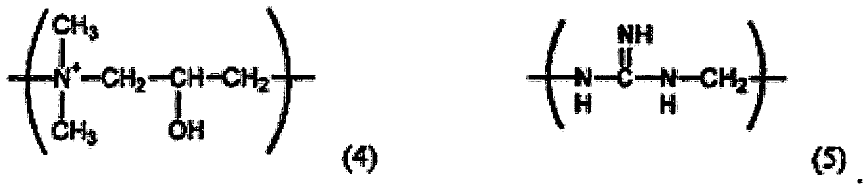

12. Procédé de formation d'une image comprenant la décharge de la composition d'encre pour jet d'encre selon l'une quelconque des revendications 1 à 10 sur un support d'enregistrement par un processus de jet d'encre.

13. Procédé de formation d'une image selon la revendication 12, dans lequel le procédé comprend en outre la décharge d'un liquide de traitement sur le support d'enregistrement, le liquide de traitement comprenant un composé polymère cationique comprenant un motif structural représenté par la formule suivante (4) ou la formule suivante (5) :
